# EUROPEAN PATENT APPLICATION

(11) **EP 4 614 857 A1**
(43) Date of publication of application: **10.09.2025**
(21) Application number: 23886406.0
(22) Date of filing: 06.11.2023
(51) Int. Cl.: H04L 5/00, H04B 7/155, H04L 1/18, H04W 72/04, H04W 72/23, H04W 4/40

(54) **METHOD FOR TRANSMITTING AND RECEIVING SIGNAL FOR WIRELESS COMMUNICATION AND APPARATUS THEREFOR**

(30) Priority: 04.11.2022 KR 20220146515
(71) Applicant: LG Electronics Inc., Yeongdeungpo-gu Seoul 07336 (KR)
(72) Inventor: SHIM, Jaenam, Seoul 06772 (KR); YOU, Hyangsun, Seoul 06772 (KR); YANG, Suckchel, Seoul 06772 (KR); KO, Hyunsoo, Seoul 06772 (KR); BAN, Choongsang, Seoul 06772 (KR); KIM, Seonwook, Seoul 06772 (KR)
(74) Representative: Plasseraud IP
(86) International application number: PCT/KR2023/017651
(87) International publication number: WO 2024/096712

(57) **Abstract**

An apparatus in a wireless communication system, according to various embodiments: receives, from a base station through a control link, a physical downlink control channel (PDCCH) including downlink control information (DCI); and transmits a hybrid automatic repeat and request (HARQ) feedback signal for the PDCCH through a backhaul link, wherein a transmission resource of the HARQ feedback signal is determined on the basis of K0 for a slot interval between the PDCCH and a physical downlink shared channel (PDSCH) and K1 for an interval between the PDSCH and the HARQ feedback signal, and on the basis that the DCI includes side control information (SCI) for the backhaul link, at least one of the K0 and K1 may be determined on the basis of a predefined rule.

## Description

### TECHNICAL FIELD

The present disclosure relates to wireless communication, and more particularly, to a method of transmitting or receiving an uplink/downlink signal in a wireless communication system and apparatus therefor.

### BACKGROUND

Wireless communication systems have been widely deployed to provide various types of communication services such as voice or data. In general, a wireless communication system is a multiple access system that supports communication of multiple users by sharing available system resources (a bandwidth, transmission power, etc.). Examples of multiple access systems include a code division multiple access (CDMA) system, a frequency division multiple access (FDMA) system, a time division multiple access (TDMA) system, an orthogonal frequency division multiple access (OFDMA) system, a single carrier frequency division multiple access (SC-FDMA) system, and a multi carrier frequency division multiple access (MC-FDMA) system.

As more and more communication devices require larger communication capacities in transmitting and receiving signals, there is a need for mobile broadband communication improved from the legacy radio access technology. Accordingly, communication systems considering services/UEs sensitive to reliability and latency are under discussion. A next-generation radio access technology in consideration of enhanced mobile broadband communication, massive Machine Type Communication (MTC), and Ultra-Reliable and Low Latency Communication (URLLC) may be referred to as new radio access technology (RAT) or new radio (NR).

### DISCLOSURE

### TECHNICAL PROBLEM

The object of the present disclosure is to provide a method of transmitting and receiving signals more accurately and efficiently.

It will be appreciated by persons skilled in the art that the objects that could be achieved with the various embodiments of the present disclosure are not limited to what has been particularly described hereinabove and the above and other objects that the various embodiments of the present disclosure could achieve will be more clearly understood from the following detailed description.

### TECHNICAL SOLUTION

In an aspect of the present disclosure, provided herein is a method of performing communication by a device having a control link and a backhaul link formed with a base station (BS) in a wireless communication system. The method includes: receiving a physical downlink control channel (PDCCH) including downlink control information (DCI) from the BS through the control link; and transmitting a hybrid automatic repeat request (HARQ) feedback signal for the PDCCH. A transmission resource for the HARQ feedback signal may be determined based on K0 and K1, where K0 represents a slot interval between the PDCCH and a physical downlink shared channel (PDSCH) and K1 represents an interval between the PDSCH and the HARQ feedback signal. Based on that side control information (SCI) for the backhaul link is included in the DCI, at least one of K0 and K1 may be determined based on a predefined rule.

Alternatively, K0 may be determined as a value corresponding to a lowest or highest index in a time domain resource allocation (TDRA) table configured through radio resource control (RRC) signaling, based on the predefined rule.

Alternatively, K0 may always be determined as 0 based on the predefined rule.

Alternatively, K1 may be determined as a largest or smallest value among K1 values configured through RRC signaling from the BS, based on the predefined rule.

Alternatively, the method may further include reporting capability information about a minimum processing time related to the transmission of the HARQ feedback signal to the BS. The device may determine K1 using the minimum processing time based on the predefined rule, regardless of an indication of K1 in the DCI.

Alternatively, the device may determine the HARQ feedback transmission resource by further considering a physical uplink control channel (PUCCH) resource indicator (PRI). Based on that a field for the PRI is not included in the DCI, the PRI may always be determined as 1, regardless of a control channel element (CCE) index where the PDCCH is received.

Alternatively, the DCI may not include a field for K0 and a start and length indicator value (SLIV), a field for K1, and a field for a PRI.

Alternatively, the HARQ feedback signal may include HARQ feedback information obtained through codebook combining only for PDCCHs including the SCI.

Alternatively, the device may be a network-controlled repeater (NCR).

In another aspect of the present disclosure, provided herein is a device configured to perform communication based on a control link and a backhaul link formed with a BS in a wireless communication system. The device may include: a radio frequency (RF) transceiver; and a processor configured to control the RF transceiver. The processor is configured to control the RF transceiver to: receive a PDCCH including DCI from the BS through the control link; and transmit a HARQ feedback signal for the PDCCH. A transmission resource for the HARQ feedback signal may be determined based on K0 and K1, where K0 represents a slot interval between the PDCCH and a PDSCH and K1 represents an interval between the PDSCH and the HARQ feedback signal. Based on that SCI for the backhaul link is included in the DCI, at least one of K0 and K1 may be determined based on a predefined rule.

In another aspect of the present disclosure, provided herein is a processing device configured to control a device having a control link and a backhaul link formed with a BS in a wireless communication system. The processing device includes: at least one processor; and at least one memory connected to the at least one processor and storing instructions that, based on execution by the at least one processor, cause a user equipment (UE) to: receive a PDCCH including DCI from the BS through the control link; and transmit a HARQ feedback signal for the PDCCH. A transmission resource for the HARQ feedback signal may be determined based on K0 and K1, where K0 represents a slot interval between the PDCCH and a PDSCH and K1 represents an interval between the PDSCH and the HARQ feedback signal. Based on that SCI for the backhaul link is included in the DCI, at least one of K0 and K1 may be determined based on a predefined rule.

In a further aspect of the present disclosure, provided herein is a method of performing communication by a BS having a control link and a backhaul link formed with a device in a wireless communication system. The method includes: transmitting a PDCCH including DCI to the device through the control link; and receiving a HARQ feedback signal for the PDCCH. A reception resource for the HARQ feedback signal may be determined based on K0 and K1, where K0 represents a slot interval between the PDCCH and a PDSCH and K1 represents an interval between the PDSCH and the HARQ feedback signal. Based on that SCI for the backhaul link is included in the DCI, at least one of K0 and K1 may be determined based on a predefined rule.

### ADVANTAGEOUS EFFECTS

According to an embodiment of the present disclosure, signal transmission and reception can be performed more accurately and efficiently in a wireless communication system.

Effects to be achieved by embodiment(s) are not limited to what has been particularly described hereinabove and other effects not mentioned herein will be more clearly understood by persons skilled in the art to which embodiment(s) pertain from the following detailed description.

### BRIEF DESCRIPTION OF THE DRAWINGS

The accompanying drawings, which are included to provide a further understanding of the disclosure and are incorporated in and constitute a part of this application, illustrate embodiments of the disclosure and together with the description serve to explain the principle of the disclosure.
FIG. 1 illustrates the structure of an LTE system to which embodiment(s) are applicable.
FIG. 2 illustrates the structure of an NR system to which embodiment(s) are applicable.
FIG. 3 illustrates the structure of an NR radio frame to which embodiment(s) are applicable.
FIG. 4 illustrates the slot structure of an NR frame to which embodiment(s) are applicable.
FIG. 5 illustrates an example of mapping physical channels in a slot.
FIG. 6 illustrates an exemplary PDCCH transmission/reception process.
FIG. 7 illustrates a process for transmitting a hybrid automatic repeat request (HARQ) acknowledgement/negative acknowledgement (ACK/NACK).
FIG. 8 schematically illustrates an example of a parent link and a child link.
FIG. 9 is a diagram illustrating an example of topology in which a network-controlled repeater (NCR) performs transmission and reception between the gNB and the UE.
FIG. 10 is a diagram illustrating a radio frequency (RF) repeater and an NCR.
FIG. 11 is a diagram for explaining a method by which a device having a backhaul link and a control link formed with a base station (BS) performs communication.
FIG. 12 is a diagram for explaining a method by which a BS having a control link and a backhaul link formed with a device perform communication.
FIG. 13 illustrates a communication system applied to the present disclosure.
FIG. 14 illustrates a wireless device applicable to the present disclosure.
FIG. 15 illustrates another example of a wireless device applicable to the present disclosure.

### DETAILED DESCRIPTION

The wireless communication system is a multiple access system that supports communication with multiple users by sharing available system resources (e.g., bandwidth, transmission power, etc.). Examples of the multiple access system include a code division multiple access (CDMA) system, a frequency division multiple access (FDMA) system, a time division multiple access (TDMA) system, an orthogonal frequency division multiple access (OFDMA) system, a single carrier frequency (SC-FDMA) system, a multi carrier frequency division multiple access (MC-FDMA) system, and the like.

A sidelink refers to a communication scheme in which a direct link is established between user equipments (UEs) to directly exchange voice or data between UEs without assistance from a base station (BS). The sidelink is being considered as one way to address the burden on the BS caused by rapidly increasing data traffic.

Vehicle-to-everything (V2X) refers to a communication technology for exchanging information with other vehicles, pedestrians, and infrastructure-built objects through wired/wireless communication. V2X may be divided into four types: vehicle-to-vehicle (V2V), vehicle-to-infrastructure (V2I), vehicle-to-network (V2N), and vehicle-to-pedestrian (V2P). V2X communication may be provided through a PC5 interface and/or a Uu interface.

As more and more communication devices require larger communication capacities in transmitting and receiving signals, there is a need for mobile broadband communication improved from the legacy radio access technology. Accordingly, communication systems considering services/UEs sensitive to reliability and latency are under discussion. A next-generation radio access technology in consideration of enhanced mobile broadband communication, massive MTC, and Ultra-Reliable and Low Latency Communication (URLLC) may be referred to as new radio access technology (RAT) or new radio (NR). Even in NR, V2X communication may be supported.

Techniques described herein may be used in various wireless access systems such as code division multiple access (CDMA), frequency division multiple access (FDMA), time division multiple access (TDMA), orthogonal frequency division multiple access (OFDMA), single carrier-frequency division multiple access (SC-FDMA), etc. CDMA may be implemented as a radio technology such as universal terrestrial radio access (UTRA) or CDMA2000. TDMA may be implemented as a radio technology such as global system for mobile communications (GSM)/general packet radio service (GPRS)/Enhanced Data Rates for GSM Evolution (EDGE). OFDMA may be implemented as a radio technology such as IEEE 802.11 (Wi-Fi), IEEE 802.16 (WiMAX), IEEE 802.20, evolved-UTRA (E-UTRA) etc. UTRA is a part of universal mobile telecommunications system (UMTS). 3GPP LTE is a part of Evolved UMTS (E-UMTS) using E-UTRA. 3GPP LTE employs OFDMA for downlink and SC-FDMA for uplink. LTE-A is an evolution of 3GPP LTE. 3GPP NR (New Radio or New Radio Access Technology) is an evolved version of 3GPP LTE/LTE-A/LTE-A pro.

5G NR is a successor technology of LTE-A, and is a new clean-slate mobile communication system with characteristics such as high performance, low latency, and high availability. 5G NR may utilize all available spectrum resources, from low frequency bands below 1 GHz to intermediate frequency bands from 1 GHz to 10 GHz and high frequency (millimeter wave) bands above 24 GHz.

For clarity of explanation, LTE-A or 5G NR is mainly described, but the technical spirit of the embodiment(s) is not limited thereto.

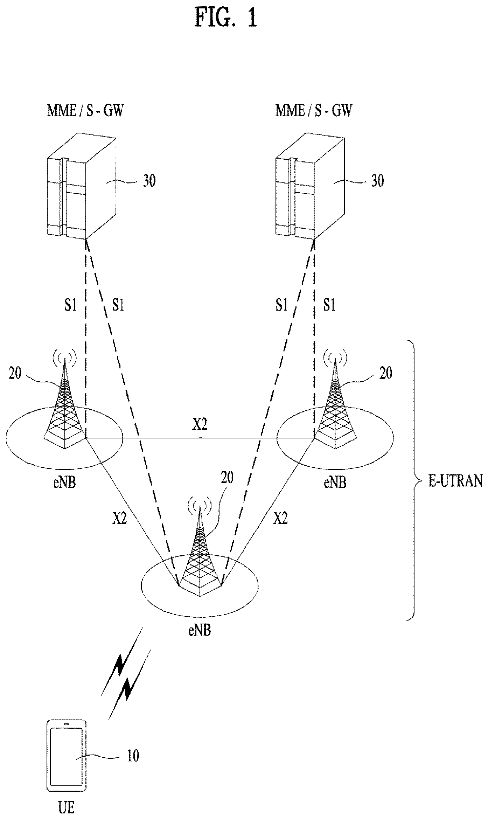

FIG. 1 illustrates the structure of an LTE system to which the present disclosure is applicable. This may also be called an evolved UMTS terrestrial radio access network (E-UTRAN) or LTE/LTE-A system.

Referring to FIG. 1, the E-UTRAN includes evolved Node Bs (eNBs) 20 which provide a control plane and a user plane to UEs 10. A UE 10 may be fixed or mobile, and may also be referred to as a mobile station (MS), user UE (UT), subscriber station (SS), mobile UE (MT), or wireless device. An eNB 20 is a fixed station communication with the UE 10 and may also be referred to as a base station (BS), a base transceiver system (BTS), or an access point.

eNBs 20 may be connected to each other via an X2 interface. An eNB 20 is connected to an evolved packet core (EPC) 39 via an S1 interface. More specifically, the eNB 20 is connected to a mobility management entity (MME) via an S1-MME interface and to a serving gateway (S-GW) via an S1-U interface.

The EPC 30 includes an MME, an S-GW, and a packet data network-gateway (P-GW). The MME has access information or capability information about UEs, which are mainly used for mobility management of the UEs. The S-GW is a gateway having the E-UTRAN as an end point, and the P-GW is a gateway having a packet data network (PDN) as an end point.

Based on the lowest three layers of the open system interconnection (OSI) reference model known in communication systems, the radio protocol stack between a UE and a network may be divided into Layer 1 (L1), Layer 2 (L2) and Layer 3 (L3). These layers are defined in pairs between a UE and an Evolved UTRAN (E-UTRAN), for data transmission via the Uu interface. The physical (PHY) layer at L1 provides an information transfer service on physical channels. The radio resource control (RRC) layer at L3 functions to control radio resources between the UE and the network. For this purpose, the RRC layer exchanges RRC messages between the UE and an eNB.

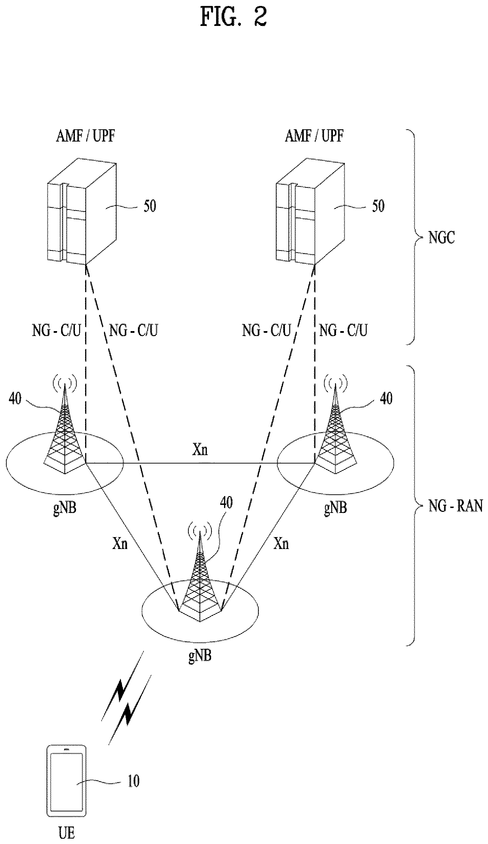

FIG. 2 illustrates the structure of a NR system to which the present disclosure is applicable.

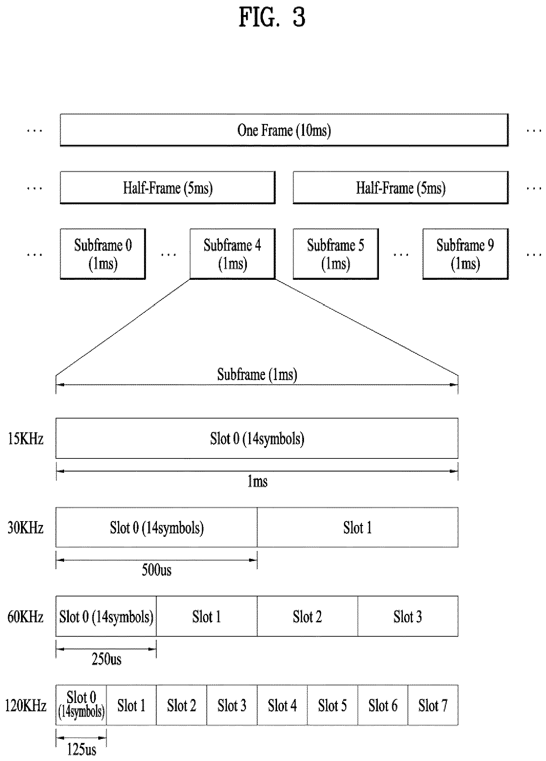

Referring to FIG. 2, a next generation radio access network (NG-RAN) may include a next generation Node B (gNB) and/or an eNB, which provides user-plane and control-plane protocol termination to a UE. In FIG. 3, the NG-RAN is shown as including only gNBs, by way of example. A gNB and an eNB are connected to each other via an Xn interface. The gNB and the eNB are connected to a 5G core network (5GC) via an NG interface. More specifically, the gNB and the eNB are connected to an access and mobility management function (AMF) via an NG-C interface and to a user plane function (UPF) via an NG-U interface.

FIG. 3 illustrates the structure of a NR radio frame to which the present disclosure is applicable.

Referring to FIG. 3, a radio frame may be used for UL transmission and DL transmission in NR. A radio frame is 10 ms in length, and may be defined by two 5-ms half-frames. An HF may include five 1-ms subframes. A subframe may be divided into one or more slots, and the number of slots in an SF may be determined according to a subcarrier spacing (SCS). Each slot may include 12 or 14 OFDM(A) symbols according to a cyclic prefix (CP).

In a normal CP (NCP) case, each slot may include 14 symbols, whereas in an extended CP (ECP) case, each slot may include 12 symbols. Herein, a symbol may be an OFDM symbol (or CP-OFDM symbol) or an SC-FDMA symbol (or DFT-s-OFDM symbol).

Table 1 below lists the number of symbols per slot N^{slot}_{symb}, the number of slots per frame *N^{frame,u}ₛₗₒₜ*, and the number of slots per subframe *N^{subframe,u}ₛₗₒₜ* according to an SCS configuration µ in the NCP case.

**[Table 1]**

| SCS (15*2^{u}) | N^{slot}_{syrnb} | N^{frame,u}ₛₗₒₜ | N^{subframe,u}ₛₗₒₜ |
|---|---|---|---|
| 15KHz (u=0) | 14 | 10 | 1 |
| 30KHz (u=1) | 14 | 20 | 2 |
| 60KHz (u=2) | 14 | 40 | 4 |
| 120KHz (u=3) | 14 | 80 | 8 |
| 240KHz (u=4) | 14 | 160 | 16 |

Table 2 below lists the number of symbols per slot, the number of slots per frame, and the number of slots per subframe according to an SCS in the ECP case.

**[Table 2]**

| SCS (15*2^{u}) | N^{slot}_{syrnb} | N^{frame,u}ₛₗₒₜ | N^{subframe,u}ₛₗₒₜ |
|---|---|---|---|
| 60KHz (u=2) | 12 | 40 | 4 |

In the NR system, different OFDM(A) numerologies (e.g., SCSs, CP lengths, etc.) may be configured for a plurality of cells aggregated for one UE. Thus, the (absolute) duration of a time resource (e.g., SF, slot, or TTI) including the same number of symbols may differ between the aggregated cells (such a time resource is commonly referred to as a time unit (TU) for convenience of description).

In NR, multiple numerologies or SCSs to support various 5G services may be supported. For example, a wide area in conventional cellular bands may be supported when the SCS is 15 kHz, and a dense urban environment, lower latency, and a wider carrier bandwidth may be supported when the SCS is 30 kHz/60 kHz. When the SCS is 60 kHz or higher, a bandwidth wider than 24.25 GHz may be supported to overcome phase noise.

The NR frequency band may be defined as two types of frequency ranges. The two types of frequency ranges may be FR1 and FR2. The numerical values of the frequency ranges may be changed. For example, the two types of frequency ranges may be configured as shown in Table 3 below. Among the frequency ranges used in the NR system, FR1 may represent "sub 6 GHz range" and FR2 may represent "above 6 GHz range" and may be called millimeter wave (mmW).

**[Table 3]**

| Frequency Range designation | Corresponding frequency range | Subcarrier Spacing (SCS) |
|---|---|---|
| FR1 | 450MHz - 6000MHz | 15, 30, 60kHz |
| FR2 | 24250MHz - 52600MHz | 60, 120, 240kHz |

As mentioned above, the numerical values of the frequency ranges of the NR system may be changed. For example, FR1 may include a band of 410 MHz to 7125 MHz as shown in Table 4 below. That is, FR1 may include a frequency band of 6 GHz (or 5850 MHz, 5900 MHz, 5925 MHz, etc.) or higher. For example, the frequency band of 6 GHz (or 5850 MHz, 5900 MHz, 5925 MHz, etc.) or higher included in FR1 may include an unlicensed band. The unlicensed band may be used for various purposes, for example, for communication for vehicles (e.g., autonomous driving).

**[Table 4]**

| Frequency Range designation | Corresponding frequency range | Subcarrier Spacing (SCS) |
|---|---|---|
| FR1 | 410MHz - 7125MHz | 15, 30, 60kHz |
| FR2 | 24250MHz - 52600MHz | 60, 120, 240kHz |

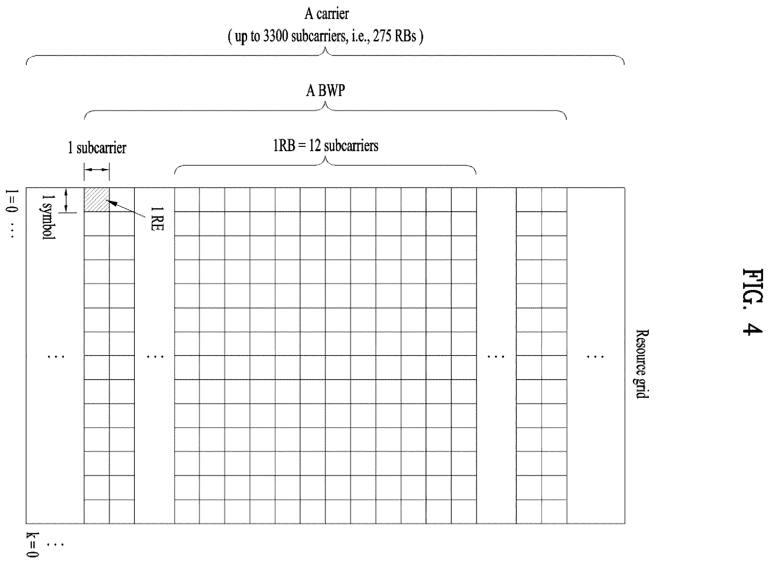

FIG. 4 illustrates the slot structure of a NR frame to which the present disclosure is applicable.

Referring to FIG. 4, one slot includes a plurality of symbols in the time domain. For example, one slot may include 14 symbols in a normal CP and 12 symbols in an extended CP. Alternatively, one slot may include 7 symbols in the normal CP and 6 symbols in the extended CP.

A carrier may include a plurality of subcarriers in the frequency domain. A resource block (RB) is defined as a plurality of consecutive subcarriers (e.g., 12 subcarriers) in the frequency domain. A bandwidth part (BWP) may be defined as a plurality of consecutive (P)RBs in the frequency domain, and the BWP may correspond to one numerology (e.g., SCS, CP length, etc.). The carrier may include up to N (e.g., 5) BWPs. Data communication may be conducted in an activated BWP. In a resource grid, each element may be referred to as a resource element (RE) and may be mapped to one complex symbol.

The wireless interface between UEs or the wireless interface between a UE and a network may be composed of an L1 layer, an L2 layer, and an L3 layer. In various embodiments of the present disclosure, the L1 layer may represent a physical layer. The L2 layer may represent, for example, at least one of a MAC layer, an RLC layer, a PDCP layer, and an SDAP layer. The L3 layer may represent, for example, an RRC layer.

### Bandwidth part (BWP)

In the NR system, up to 400 MHz may be supported per component carrier (CC). If a UE operating on a wideband CC always operates with the RF for the entire CCs turned on, the battery consumption of the UE may be increased. Alternatively, considering various use cases (e.g., eMBB, URLLC, Mmtc, V2X, etc.) operating within one wideband CC, different numerologies (e.g., sub-carrier spacings) may be supported for different frequency bands within a specific CC. Alternatively, the capability for the maximum bandwidth may differ among the UEs. In consideration of this, the BS may instruct the UE to operate only in a partial bandwidth, not the entire bandwidth of the wideband CC. The partial bandwidth is defined as a bandwidth part (BWP) for simplicity. Here, the BWP may be composed of resource blocks (RBs) contiguous on the frequency axis, and may correspond to one numerology (e.g., sub-carrier spacing, CP length, slot/mini-slot duration).

The BS may configure multiple BWPs in one CC configured for the UE. For example, a BWP occupying a relatively small frequency region may be configured in a PDCCH monitoring slot, and a PDSCH indicated by the PDCCH in a larger BWP may be scheduled. Alternatively, when UEs are concentrated in a specific BWP, some of the UEs may be configured in another BWP for load balancing. Alternatively, a spectrum in the middle of the entire bandwidth may be punctured and two BWPs on both sides may be configured in the same slot in consideration of frequency-domain inter-cell interference cancellation between neighbor cells. That is, the BS may configure at least one DL/UL BWP for the UE associated with the wideband CC and activate at least one DL/UL BWP among the configured DL/UL BWP(s) at a specific time (through L1 signaling, MAC CE or RRC signalling, etc.). The BS may instruct the UE to switch to another configured DL/UL BWP (through L1 signaling, MAC CE or RRC signalling, etc.). Alternatively, when a timer expires, the UE may switch to a predetermined DL/UL BWP. The activated DL/UL BWP is defined as an active DL/UL BWP. The UE may fail to receive DL/UL BWP configuration during an initial access procedure or before an RRC connection is setup. A DL/UL BWP assumed by the UE in this situation is defined as an initial active DL/UL BWP.

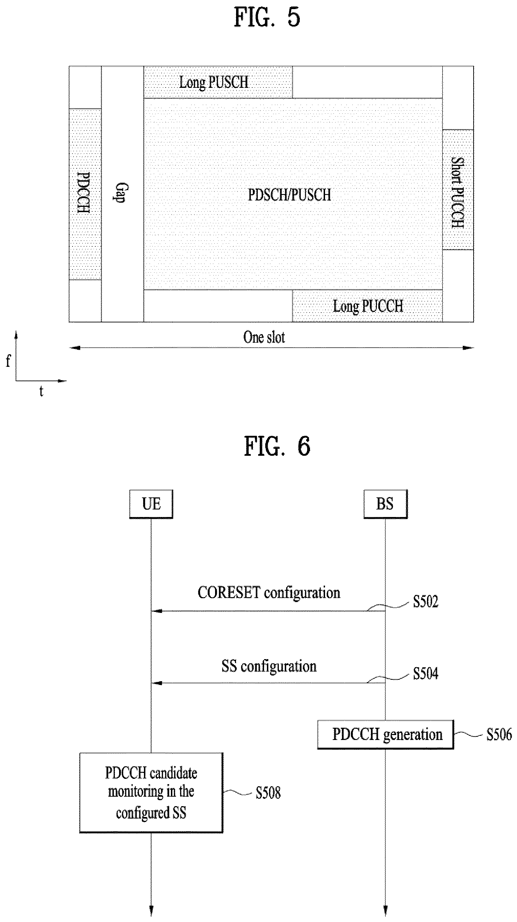

FIG. 5 illustrates an example of mapping physical channels in a slot.

A slot may include a DL control channel, DL or UL data, a UL control channel, etc., all of which are included. For example, the first N symbols in a slot may be used to transmit a DL control channel (hereinafter, referred to as a DL control region), and the last M symbols in the slot may be used to transmit a UL control channel (hereinafter, referred to as a UL control region). N and M are each integers greater than or equal to 0. A resource region (hereinafter, referred to as a data region) between the DL control region and the UL control region may be used for DL data transmission or UL data transmission. A time gap for DL-to-UL or UL-to-DL switching may exist between the control region and the data region. A PDCCH may be transmitted in the DL control region, and a PDSCH may be transmitted in the DL data region. Some symbols at the time of switching from DL to UL in a slot may be used as a time gap.

In an NR system, a frame is characterized by a self-contained structure in which all of a DL control channel, DL or UL data, and a UL channel may be included in one slot. For example, the first N symbols of a slot may be used to carry a DL channel (e.g., PDCCH) (hereinafter, referred to as a DL control region), and the last M symbols of the slot may be used to carry a UL channel (e.g., PUCCH) (hereinafter, referred to as a UL control region). Each of N and M is an integer equal to or larger than 0. A resource area (hereinafter, referred to as a data region) between the DL control region and the UL control region may be used to transmit DL data (e.g., PDSCH) or UL data (e.g., PUSCH). A guard period (GP) provides a time gap for switching from a transmission mode to a reception mode or from the reception mode to the transmission mode. Some symbols at a DL-to-UL switching time in a subframe may be configured as a GP.

The PDCCH delivers DCI. For example, the PDCCH (i.e., DCI) may carry information about a transport format and resource allocation of a DL shared channel (DL-SCH), resource allocation information of an uplink shared channel (UL-SCH), paging information on a paging channel (PCH), system information on the DL-SCH, information on resource allocation of a higher-layer control message such as an RAR transmitted on a PDSCH, a transmit power control command, information about activation/release of configured scheduling, and so on. The DCI includes a cyclic redundancy check (CRC). The CRC is masked with various identifiers (IDs) (e.g., a radio network temporary identifier (RNTI)) according to an owner or usage of the PDCCH. For example, if the PDCCH is for a specific UE, the CRC is masked by a UE ID (e.g., cell-RNTI (C-RNTI)). If the PDCCH is for a paging message, the CRC is masked by a paging-RNTI (P-RNTI). If the PDCCH is for system information (e.g., a system information block (SIB)), the CRC is masked by a system information RNTI (SI-RNTI). When the PDCCH is for an RAR, the CRC is masked by a random access-RNTI (RA-RNTI).

FIG. 6 illustrates an exemplary PDCCH transmission/reception process.

Referring to FIG. 6, a BS may transmit a control resource set (CORESET) configuration to a UE (S502). A CORESET is defined as a resource element group (REG) set having a given numerology (e.g., a subcarrier spacing (SCS), a cyclic prefix (CP) length, and so on). An REG is defined as one OFDM symbol by one (physical) resource block (P)RB. A plurality of CORESETs for one UE may overlap with each other in the time/frequency domain. A CORESET may be configured by system information (e.g., a master information block (MIB)) or higher-layer signaling (e.g., radio resource control (RRC) signaling). For example, configuration information about a specific common CORESET (e.g., CORESET #0) may be transmitted in the MIB. For example, a PDSCH carrying system information block 1 (SIB1) may be scheduled by a specific PDCCH, and CORESET #0 may be used to transmit the specific PDCCH. System information (SIB1) broadcast in a cell includes cell-specific PDSCH configuration information, PDSCH-ConfigCommon. PDSCH-ConfigCommon includes a list (or look-up table) of parameters related to a time-domain resource allocation, pdsch-TimeDomainAllocationList. Each pdsch-TimeDomainAllocationList may include up to 16 entries (or rows) each being joint-encoded {K0, PDSCH mapping type, PDSCH start symbol and length (SLIV)}. Aside from (additionally to) pdsch-TimeDomainAllocationList configured through PDSCH-ConfigCommon, pdsch-TimeDomainAllocationList may be provided through a UE-specific PDSCH configuration, PDSCH-Config. pdsch-TimeDomainAllocationList configured UE-specifically has the same structure as pdsch-TimeDomainAllocationList provided UE-commonly. For K0 and an SLIV of pdsch-TimeDomainAllocationList, the following description is referred to.

Further, configuration information about CORESET #N (e.g., N>0) may be transmitted by RRC signaling (e.g., cell-common RRC signaling, UE-specific RRC signaling, or the like). For example, the UE-specific RRC signaling carrying CORESET configuration information may include, but not limited to, various types of signaling such as an RRC setup message, an RRC reconfiguration message, and/or BWP configuration information. Specifically, a CORESET configuration may include the following information/fields.
- controlResourceSetId: Indicates the ID of a CORESET.
- frequencyDomainResources: Indicates the frequency-domain resources of the CORESET. The resources are indicated by a bitmap in which each bit corresponds to an RB group (= 6 (consecutive) RBs). For example, the most significant bit (MSB) of the bitmap corresponds to a first RB group in a BWP. An RB group corresponding to a bit having a bit value of 1 is allocated as frequency-domain resources of the CORESET.
- duration: Indicates the time-domain resources of the CORESET. It indicates the number of consecutive OFDM symbols included in the CORESET. The duration has a value between 1 and 3.
- cce-REG-MappingType: Indicates a control channel element (CCE)-to-REG mapping type. An interleaved type and a non-interleaved type are supported.
- interleaverSize: Indicates an interleaver size.
- pdcch-DMRS-ScramblingID: Indicates a value used for PDCCH DMRS initialization. When pdcch-DMRS-ScramblingID is not included, the physical cell ID of a serving cell is used.
- precoderGranularity: Indicates a precoder granularity in the frequency domain.
- reg-BundleSize: Indicates an REG bundle size.
- tci-PresentInDCI: Indicates whether a transmission configuration index (TCI) field is included in DL-related DCI.
- tci-StatesPDCCH-ToAddList: Indicates a subset of TCI states configured in pdcch-Config, used for providing quasi-co-location (QCL) relationships between DL RS(s) in an RS set (TCI-State) and PDCCH DMRS ports.

Further, the BS may transmit a PDCCH search space (SS) configuration to the UE (S504). The PDCCH SS configuration may be transmitted by higher-layer signaling (e.g., RRC signaling). For example, the RRC signaling may include, but not limited to, various types of signaling such as an RRC setup message, an RRC reconfiguration message, and/or BWP configuration information. While a CORESET configuration and a PDCCH SS configuration are shown as separately signaled in FIG. 5, for convenience of description, the present disclosure is not limited thereto. For example, the CORESET configuration and the PDCCH SS configuration may be transmitted in one message (e.g., by one RRC signaling) or separately in different messages.

The PDCCH SS configuration may include information about the configuration of a PDCCH SS set. The PDCCH SS set may be defined as a set of PDCCH candidates monitored (e.g., blind-detected) by the UE. One or more SS sets may be configured for the UE. Each SS set may be a UE-specific search space (USS) set or a common search space (CSS) set. For convenience, PDCCH SS set may be referred to as "SS" or "PDCCH SS."

A PDCCH SS set includes PDCCH candidates. A PDCCH candidate is CCE(s) that the UE monitors to receive/detect a PDCCH. The monitoring includes blind decoding (BD) of PDCCH candidates. One PDCCH (candidate) includes 1, 2, 4, 8, or 16 CCEs according to an aggregation level (AL). One CCE includes 6 REGs. Each CORESET configuration is associated with one or more SSs, and each SS is associated with one CORESET configuration. One SS is defined based on one SS configuration, and the SS configuration may include the following information/fields.
- searchSpaceId: Indicates the ID of an SS.
- controlResourceSetId: Indicates a CORESET associated with the SS.
- monitoringSlotPeriodicityAndOffset: Indicates a periodicity (in slots) and offset (in slots) for PDCCH monitoring.
- monitoringSymbolsWithinSlot: Indicates the first OFDM symbol(s) for PDCCH monitoring in a slot configured with PDCCH monitoring. The first OFDM symbol(s) for PDCCH monitoring is indicated by a bitmap with each bit corresponding to an OFDM symbol in the slot. The MSB of the bitmap corresponds to the first OFDM symbol of the slot. OFDM symbol(s) corresponding to bit(s) set to 1 corresponds to the first symbol(s) of a CORESET in the slot.
- nrofCandidates: Indicates the number of PDCCH candidates (one of values 0, 1, 2, 3, 4, 5, 6, and 8) for each AL where AL={1, 2, 4, 8, 16}.
- searchSpaceType: Indicates CSS or USS as well as a DCI format used in the corresponding SS type.

Subsequently, the BS may generate a PDCCH and transmit the PDCCH to the UE (S506), and the UE may monitor PDCCH candidates in one or more SSs to receive/detect the PDCCH (S508). An occasion (e.g., time/frequency resources) in which the UE is to monitor PDCCH candidates is defined as a PDCCH (monitoring) occasion. One or more PDCCH (monitoring) occasions may be configured in a slot.

Table 5 shows the characteristics of each SS.

**[Table 5]**

| Type | Search Space | RNTI | Use Case |
|---|---|---|---|
| Type0-PDCCH | Common | SI-RNTI on a primary cell | SIB Decoding |
| Type0A-PDCCH | Common | SI-RNTI on a primary cell | SIB Decoding |
| Type1-PDCCH | Common | RA-RNTI or TC-RNTI on a primary cell | Msg2, Msg4 decoding in RACH |
| Type2-PDCCH | Common | P-RNTI on a primary cell | Paging Decoding |
| Type3-PDCCH | Common | INT-RNTI, SFI-RNTI, TPC-PUSCH-RNTI, TPC-PUCCH-RNTI, TPC-SRS-RNTI, C-RNTI, MCS-C-RNTI, or CS-RNTI(s) | |
| UE Specific | UE Specific | C-RNTI, or MCS-C-RNTI, or CS-RNTI(s) | User specific PDSCH decoding |

Table 6 shows DCI formats transmitted on the PDCCH.

**[Table 6]**

| DCI format | Usage |
|---|---|
| 0_0 | Scheduling of PUSCH in one cell |
| 0_1 | Scheduling of PUSCH in one cell |
| 1_0 | Scheduling of PDSCH in one cell |
| 1_1 | Scheduling of PDSCH in one cell |
| 2_0 | Notifying a group of UEs of the slot format |
| 2_1 | Notifying a group of UEs of the PRB(s) and OFDM symbol(s) where UE may assume no transmission is intended for the UE |
| 2_2 | Transmission of TPC commands for PUCCH and PUSCH |
| 2_3 | Transmission of a group of TPC commands for SRS transmissions by one or more UEs |

DCI format 0_0 may be used to schedule a TB-based (or TB-level) PUSCH, and DCI format 0_1 may be used to schedule a TB-based (or TB-level) PUSCH or a code block group (CBG)-based (or CBG-level) PUSCH. DCI format 1_0 may be used to schedule a TB-based (or TB-level) PDSCH, and DCI format 1_1 may be used to schedule a TB-based (or TB-level) PDSCH or a CBG-based (or CBG-level) PDSCH (DL grant DCI). DCI format 0_0/0_1 may be referred to as UL grant DCI or UL scheduling information, and DCI format 1_0/1_1 may be referred to as DL grant DCI or DL scheduling information. DCI format 2_0 is used to deliver dynamic slot format information (e.g., a dynamic slot format indicator (SFI)) to a UE, and DCI format 2_1 is used to deliver DL pre-emption information to a UE. DCI format 2_0 and/or DCI format 2_1 may be delivered to a corresponding group of UEs on a group common PDCCH which is a PDCCH directed to a group of UEs.

DCI format 0_0 and DCI format 1_0 may be referred to as fallback DCI formats, whereas DCI format 0_1 and DCI format 1_1 may be referred to as non-fallback DCI formats. In the fallback DCI formats, a DCI size/field configuration is maintained to be the same irrespective of a UE configuration. In contrast, the DCI size/field configuration varies depending on a UE configuration in the non-fallback DCI formats.

A CCE-to-REG mapping type is configured as one of an interleaved CCE-to-REG type and a non-interleaved CCE-to-REG type.
- Non-interleaved CCE-to-REG mapping (or localized CCE-to-REG mapping) (FIG. 5): 6 REGs for a given CCE are grouped into one REG bundle, and all of the REGs for the given CCE are contiguous. One REG bundle corresponds to one CCE.
- Interleaved CCE-to-REG mapping (or distributed CCE-to-REG mapping): 2, 3 or 6 REGs for a given CCE are grouped into one REG bundle, and the REG bundle is interleaved within a CORESET. In a CORESET including one or two OFDM symbols, an REG bundle includes 2 or 6 REGs, and in a CORESET including three OFDM symbols, an REG bundle includes 3 or 6 REGs. An REG bundle size is set on a CORESET basis.

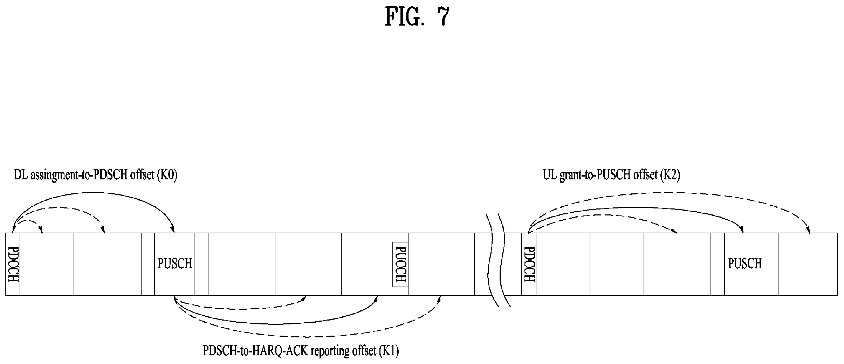

FIG. 7 illustrates an exemplary ACK/NACK transmission process

Referring to FIG. 7, the UE may detect a PDCCH in slot #n. The PDCCH includes DL scheduling information (e.g., DCI format 1_0 or DCI format 1_1). The PDCCH indicates a DL assignment-to-PDSCH offset, K0 and a PDSCH-to-HARQ-ACK reporting offset, K1. For example, DCI format 1_0 and DCI format 1_1 may include the following information.
- Frequency domain resource assignment: Indicates an RB set assigned to a PDSCH.
- Time domain resource assignment: Indicates K0 and the starting position (e.g., OFDM symbol index) and length (e.g., the number of OFDM symbols) of the PDSCH in a slot
- PDSCH-to-HARQ_feedback timing indicator: Indicates K1.
- HARQ process number (4 bits): Indicates the HARQ process ID of data (e.g., a PDSCH or TB).
- PUCCH resource indicator (PRI): Indicates a PUCCH resource to be used for UCI transmission among a plurality of PUCCH resources in a PUCCH resource set.

After receiving a PDSCH in slot #(n+K0) according to the scheduling information of slot #n, the UE may transmit UCI on a PUCCH in slot #(n+K1). The UCI may include an HARQ-ACK response to the PDSCH. FIG. 5 is based on the assumption that the SCS of the PDSCH is equal to the SCS of the PUCCH, and slot #n1=slot #(n+K0), for convenience, which should not be construed as limiting the present disclosure. When the SCSs are different, K1 may be indicated/interpreted based on the SCS of the PUCCH.

In the case where the PDSCH is configured to carry one TB at maximum, the HARQ-ACK response may be configured in one bit. In the case where the PDSCH is configured to carry up to two TBs, the HARQ-ACK response may be configured in two bits if spatial bundling is not configured and in one bit if spatial bundling is configured. When slot #(n+K1) is designated as an HARQ-ACK transmission timing for a plurality of PDSCHs, UCI transmitted in slot #(n+K1) includes HARQ-ACK responses to the plurality of PDSCHs.

Whether the UE should perform spatial bundling for an HARQ-ACK response may be configured for each cell group (e.g., by RRC/higher layer signaling). For example, spatial bundling may be configured for each individual HARQ-ACK response transmitted on the PUCCH and/or HARQ-ACK response transmitted on the PUSCH.

When up to two (or two or more) TBs (or codewords) may be received at one time (or schedulable by one DCI) in a corresponding serving cell (e.g., when a higher layer parameter *maxNrofCodeWordsScheduledByDCI* indicates 2 TBs), spatial bundling may be supported. More than four layers may be used for a 2-TB transmission, and up to four layers may be used for a 1-TB transmission. As a result, when spatial bundling is configured for a corresponding cell group, spatial bundling may be performed for a serving cell in which more than four layers may be scheduled among serving cells of the cell group. A UE which wants to transmit an HARQ-ACK response through spatial bundling may generate an HARQ-ACK response by performing a (bitwise) logical AND operation on A/N bits for a plurality of TBs.

For example, on the assumption that the UE receives DCI scheduling two TBs and receives two TBs on a PDSCH based on the DCI, a UE that performs spatial bundling may generate a single A/N bit by a logical AND operation between a first A/N bit for a first TB and a second A/N bit for a second TB. As a result, when both the first TB and the second TB are ACKs, the UE reports an ACK bit value to a BS, and when at least one of the TBs is a NACK, the UE reports a NACK bit value to the BS.

For example, when only one TB is actually scheduled in a serving cell configured for reception of two TBs, the UE may generate a single A/N bit by performing a logical AND operation on an A/N bit for the one TB and a bit value of 1. As a result, the UE reports the A/N bit for the one TB to the BS.

There are plurality of parallel DL HARQ processes for DL transmissions at the BS/UE. The plurality of parallel HARQ processes enable continuous DL transmissions, while the BS is waiting for an HARQ feedback indicating successful or failed reception of a previous DL transmission. Each HARQ process is associated with an HARQ buffer in the medium access control (MAC) layer. Each DL HARQ process manages state variables such as the number of MAC physical data unit (PDU) transmissions, an HARQ feedback for a MAC PDU in a buffer, and a current redundancy version. Each HARQ process is identified by an HARQ process ID.

Below, the PUSCH transmission process is described.

The UE may detect a PDCCH in slot #n. The PDCCH includes DL scheduling information (e.g., DCI format 1_0 or 1_1). DCI format 1_0 or 1_1 may include the following information.
- Frequency domain resource assignment: Indicates an RB set assigned to the PUSCH.
- Time domain resource assignment: Indicates a slot offset K2 and the starting position (e.g., OFDM symbol index) and duration (e.g., the number of OFDM symbols) of the PUSCH in a slot. The starting symbol and length of the PUSCH may be indicated by a start and length indicator value (SLIV), or separately.

The UE may then transmit a PUSCH in slot #(n+K2) according to the scheduling information in slot #n. The PUSCH includes a UL-SCH TB

### Method of configuring HARQ-ACK timing

The HARQ timing is defined by two parameters: K0 and K1. K0 and K1 represent a DL grant PDCCH to corresponding PDSCH transmission and a PDSCH to the slot with the corresponding HARQ-ACK transmission at slot granularity. These values are configured considering the UE processing time according to the capability. The K0 and K1 values are indicated by DCI. Specifically, the K0 value is indicated as follow. The row index of PDSCH-TimeDomainResourceAllocationList configured by RRC is indicated through the time domain resource assignment field of a PDSCH in DL grant DCI. A corresponding IE specifies the K0 value, which is a slot offset between the DCI and its scheduled PDSCH. If the field is not present, the UE applies a value of 0 for K0. The time domain resource assignment is 4 bits, and the maximum number of PDSCH-TimeDomainResourceAllocationList entries, i.e., maxNrofDL-Allocations, is 16. To specify the K1 value, either dl-DataToUL-ACK or dl-DataToUL-ACKForDCIFormat1_2 is indicated through a PDSCH-to-HARQ feedback timing indicator field in the DL grant DCI, with a maximum of 3 bits. That is, both K0 and K1 values are indicated by the IE values RRC-configured as DCI. If the current configuration is reused as it is, it requires a minimum of 5 bits and a maximum of 7 bits.

The key parameters related to HARQ-ACK timing (refer to TS 38.331) may include the following parameters.
- k0: k0 may be a slot offset between DCI and a scheduled PDSCH (refer to TS 38.214, section 5.1.2.1). For k0-r17, only the values {0..32} may be applicable for a 120-kHz PDSCH SCS. If the field for k0 is absent, the UE may apply a value of 0 for k0.
- dl-DataToUL-ACK and dl-DataToUL-ACK-DCI-1-2: dl-DataToUL-ACK and dl-DataToUL-ACK-DCI-1-2 may be the timing lists for a PDSCH given for a DL ACK (refer to Section 9.1.2 of TS 38.213). The dl-DataToUL-ACK field is applied to DCI format 1_1, and the dl-DataToUL-ACK-DCI-1-2 field is applied to DCI format 1_2. If dl-DataToUL-ACK-r16 or dl-DataToUL-ACK-r17 is signaled, the UE needs to ignore dl-DataToUL-ACK (without suffix). A value of -1 may correspond to an "inapplicable value" when no A/N feedback timing is explicitly included in PDSCH scheduling. The dl-DataToUL-ACK-r17 and dl-DataToUL-ACK-DCI-1-2-r17 fields may only be applied to an SCS of 480 kHz or 960 kHz.

### Method of configuring PUCCH resource and HARQ-ACK codebook

A PUCCH resource is designated based on a combination of a PRI, a CCE index, and a UCI payload size. First, a PUCCH resource set to be used is determined by the UCI payload size (one of the PUCCH resource sets 0 to 3 is selected). If the PUCCH resource set is not PUCCH resource set 0, that is, if the UCI payload size is greater than 2, a specific PUCCH resource within the set is determined by the PRI. In the case of PUCCH resource set 0, i.e., if the UCI payload size is 2 or less, the PUCCH resource is determined by both the CCE index and PRI. Among these, a part that needs to be indicated by DCI is the 3-bit PRI.

HARQ-ACK codebooks include semi-static (type-1) HARQ-ACK codebooks and dynamic (type-2) HARQ-ACK codebooks. The type of codebook to be used is determined depending on whether the RRC parameter HARQ_ACK-codebook is semi-static or dynamic. The representative feature of the semi-static codebook is that a PDSCH-to-HARQ-ACK timing (i.e., a set of K1) and PDSCH reception occasions (i.e., a set of {K0, SLIV}) may be configured. Therefore, the number of bits to be transmitted in an ACK/NACK report is fixed and may potentially be large. As a result, in specific cases, HARQ-ACK fallback to the semi-static codebook may be supported. Additionally, since multiple PDSCHs may be scheduled in a single slot, for the semi-static HARQ-ACK codebook, pruning is used to determine which PDSCH each HARQ-ACK bit corresponds to. In other words, if the PDSCHs are in the same slot, pruning is supported to determine which PDSCH each HARQ-ACK bit corresponds to, based on the SLIV. Here, pruning refers to a process used to determine which PDSCH each bit corresponds to for overlapping SLIVs within the same slot. This process is carried out through the following steps.
- Determine a SLIV (e.g., SLIV A) with earliest ending symbol
- Determine a set of SLIVs (e.g., Set X) which overlap with the SLIV A
- Allocate same HARQ-ACK bit for the SLIV A and the Set X (then, remove them)
- Find a new SLIV A and its Set X among the remaining SLIVs

The feature of the type-2 codebook is that the type-2 codebook supports an ACK/NACK report for a scheduled PDSCH. Thus, the number of bits to be transmitted in the ACK/NACK report may be variable. In this case, ambiguity may arise regarding the number of bits to be transmitted in the ACK/NACK report between the UE and gNB. To prevent this, a counter-downlink assignment index (C-DAI) and a total-downlink assignment index (T-DAI) are indicated through DL grant DCI. Specifically, the C-DAI is signaled in both fallback and non-fallback DCI, while the T-DAI is only signaled in non-fallback DCI. Furthermore, when a CBG configuration is used together, a first sub-codebook assigns a TB-based PDSCH, and a second sub-codebook assigns a CBG-based PDSCH. When there is PDSCH reception, the C-DAI represents the cumulative number of {CC, m} pairs. In this case, for the {CC, M} pair, CC is mapped first, followed by m. CC stands for component carrier, and m represents the downlink assignment index (DAI) number. Similarly, when there is PDSCH reception, the T-DAI represents the total number of {CC, m} pairs. For the {CC, M} pair, CC is mapped first, followed by m. CC stands for a component carrier, and m represents the DAI number.

In NR, an operation in which the UE transmits an ACK for a PDCCH may be supported for the following PDCCHs.
(1) SPS PDSCH release PDCCH
   - DCI format 1_0/1_1/1_2
   - CS-RNTI
   - If the values of fields are a specific combination, it is determined as SPS PDSCH release.
(2) TCI state update PDCCH
   - DCI format 1_1 or DCI format 1_2
(3) SCell dormancy PDCCH
   - DCI format 0_1/1_1/2_6
   - SCell dormancy indication field
   - the UE generates a HARQ-ACK information bit as described in clause 9.1.3 for a DCI format 1_1 indicating SCell dormancy and the HARQ-ACK information bit value is ACK.
(4) Unified TCI indication (R17) PDCCH

However, for all of the above cases, a mechanism for the UE to transmit an ACK for a PDSCH is borrowed and supported. In other words, the purpose is to refer to a PDSCH configuration or PUCCH configuration for configuring the HARQ-ACK timing and HARQ-ACK codebook and to avoid introducing a new DCI format.

### IAB (Integrated Access / Backhaul)

An example of a network with such integrated access and backhaul links, where an IAB node or relay node (rTRP) can multiplex access and backhaul links in time, frequency, or space (e.g., beam-based operations).

The operations of different links may be at the same or different frequencies (also referred to as 'in-band' and 'out-band' relays). Efficient support of an out-band relay is important in some NR deployment scenarios, but it is very important to understand in-band operational requirements, which mean close interaction with an access link operating at the same frequency, to accept duplex constraints and avoid/mitigate interference.

In addition, operating an NR system in the mmWave spectrum may present several unique challenges, including experiencing severe short-term blocking that may not be easily mitigated by current RRC-based handover mechanisms due to the larger time scale required to complete a procedure in comparison to short-term blocking.

To overcome short-term blocking in mmWave systems, it may require a fast RAN-based mechanism (which does not necessarily require intervention of a core network) for inter- rTRP switching.

The need to mitigate short-term blocking of an NR operation in mmWave spectrum with the need for easier deployment of a self-backhauled NR cell may lead to the need for the development of an integrated framework that enables fast switching of access and backhaul links.

In addition, Over-The-Air (OTA) coordination between rTRPs may be considered as mitigating interference and supporting end-to-end route selection and optimization.

The following requirements and aspects may need to be resolved by an integrated access and wireless backhaul (IAB) for NR.
- Efficient and flexible operation for in-band and out-band broadcasting in indoor and outdoor scenarios
- Multi-hop and redundant connections
- End-to-end route selection and optimization
- Backhaul link support with high spectrum efficiency
- Legacy NR UE support

Legacy NR (new RAT) is designed to support half-duplex devices. In addition, half duplex of an IAB scenario is supported and worthy of being targeted. Furthermore, a full duplex IAB device may be studied.

In the IAB scenario, if each IAB node or Relay Node (RN) does not have scheduling capability, a Donor gNB (DgNB) must schedule the entire links among DgNB-related RNs and UEs. In other words, the DgNB may collect traffic information from all related RNs, make scheduling decisions for all links, and then inform each RN of schedule information.

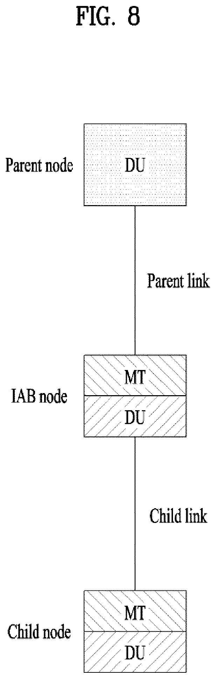

FIG. 8 schematically illustrates an example of a parent link and a child link.

As shown in FIG. 8, a link between an IAB node and a parent node is called a parent link, and a link between an IAB node and a child node/UE is called a child link. That is, a link between MT and parent DU is called a parent link, and a link between DU and child MT/UE is called a child link.

Yet, depending on interpretation or perspective, a link between an IAB node and a parent node may be called a backhaul link, and a link between an IAB node and a child node/UE may be called an access link.

An IAB node may receive a slot format configuration for communication with a parent node and a slot format configuration for communication with a child node/access UE.

In the existing IAB node, a time division multiplexing (TDM) operation in which a DU and an MT operate through different time resources has been performed. On the other hand, resource multiplexing such as SDM/FDM, FC, etc. between the DU and the MT is required for efficient resource operation. As shown in FIG. 8, a link between the IAB node (IAB MT) and the parent node is referred to as a parent link, and a link between the IAB node (IAB DU) and the child node (child MT) is referred to as a child link. At this time, the TDM operation between the parent link and the child link has been discussed, and the SDM/FDM and FD operations are being discussed.

The DU and the MT existing in the same IAB node (or co-located) cannot operate simultaneously due to intra-node interference, slot/symbol boundary misalignment, power sharing, etc., and can operate in TDM. On the other hand, multiplexing of SDM/FDM may be used between the DU and the MT. Such multiplexing is applicable to an example case in which, since DU and MT use different panels, there is little interference between the panels. In this case, DU and MT existing (or co-located) in the same IAB node can transmit or receive data or information simultaneously, but it is impossible for each of the DU and the MT to perform transmission and reception simultaneously or to perform reception and transmission simultaneously.

Alternatively, FD may be used between the DU and the MT. This is applicable in cases where there is little interference between the DU and the MT, such as when a frequency domain where the DU operates and a frequency domain where the MT operates are far apart. In this case, the DU and the MT existing in the same IAB node (or co-located) can freely transmit and receive data simultaneously. The DU and the MT can transmit or receive data simultaneously, and it is also possible for each of the DU and the MT to perform transmission and reception simultaneously or to perform reception and transmission simultaneously.

There can be N MT-CCs and M DU-cells within an IAB node. MT-CCs existing in the IAB node may operate through the same or different frequency resources, and one MT-CC may be connected to one or more parent DU-cells. DU-cells existing in the IAB node may operate through the same or different frequency resources

For a specific MT-CC/DU-cell pair within the IAB node, the MT-CC and the DU-cell may be in either TDM relationship or no-TDM relationship for the following four Tx/Rx direction combinations, and TDM or no-TDM may vary for each Tx/Rx combination.
- DU-Tx / MT-Tx
- DU-Rx / MT-Rx
- DU-Tx / MT-Rx
- DU-Rx / MT-Tx

For example, for a specific MT-CC/DU-cell pair, all of the four Tx/Rx combinations can operate with TDM. In this case, the corresponding DU-cell and the corresponding MT-CC should always operate with TDM regardless of Tx/Rx directions of the DU-cell and the MT-CC. In another example, for a specific MT-CC/DU-cell pair, all of the four Tx/Rx combinations can operate with no-TDM. In this case, the corresponding DU-cell and MT-CC can always operate simultaneously with no-TDM regardless of the Tx/Rx directions of the DU-cell and MT-CC. In another example, for a specific MT-CC/DU-cell pair, DU-Tx/MT-Tx and DU-Rx/MT-Rx can operate with no-TDM, and DU-Tx/MT-Rx and DU-Rx/MT-Tx can operate with TDM. The above-described operation relates to a method (e.g., SDM/FDM) for allowing simultaneous operation when the Tx/Rx directions of the DU-cell and the MT-CC are the same, and this method can operate simultaneously when the Tx/Rx directions of the DU-cell and the MT-CC are the same. TDM/no-TDM information for each Tx/Rx combination can be configured/determined differently or independently for each specific MT-CC/DU-cell pair within the IAB node.

At this time, the IAB MT may be connected to two parent DUs using, for example, a dual-connectivity method or a DAPS-HO method.

### Network-controlled repeater (NCR) in NR

Coverage is a fundamental aspect of cellular network deployments. Mobile operators rely on different types of network nodes to offer blanket coverage in their deployments. Deployment of regular full-stack cells is one option but it may not always be possible (e.g., no availability of backhaul) or economically viable. As a result, new types of network nodes have been considered to increase mobile operators' flexibility for their network deployments. For example, Integrated Access and Backhaul (IAB) was introduced in Rel-16 and enhanced in Rel-17 as a new type of network node not requiring a wired backhaul. Another type of network node is the RF repeater which simply amplify-and-forward any signal that they receive. RF repeaters have seen a wide range of deployments in 2G, 3G and 4G to supplement the coverage provided by regular full-stack cells. In Rel-17, RAN4 specified RF and EMC requirements for such RF repeaters for NR targeting both FR1 and FR2. While an RF repeater presents a cost effective means of extending network coverage, it has its limitations. An RF repeater simply does an amplify-and-forward operation without being able to take into account various factors that could improve performance. Such factors may include information on semi-static and/or dynamic downlink/uplink configuration, adaptive transmitter/receiver spatial beamforming, ON-OFF status, etc.

A network-controlled repeater is an enhancement over conventional RF repeaters with the capability to receive and process side control information from the network. Side control information could allow a network-controlled repeater to perform its amplify-and-forward operation in a more efficient manner. Potential benefits could include mitigation of unnecessary noise amplification, transmissions and receptions with better spatial directivity, and simplified network integration.

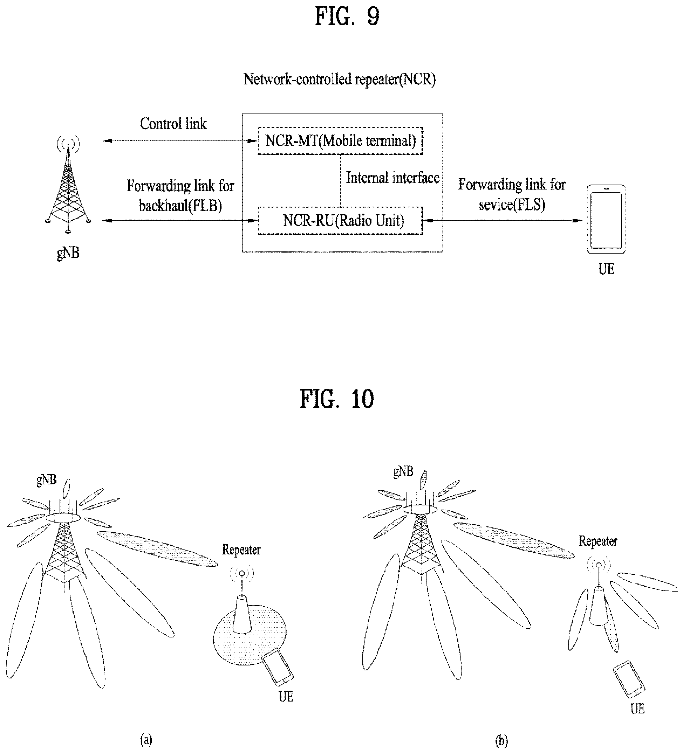

FIG. 9 is a diagram illustrating an example of topology in which a network-controlled repeater (NCR) performs transmission and reception between the gNB and the UE.

Referring to FIG. 9, the NCR may include a radio unit (RU) and a mobile terminal (MT).

The gNB may include a central unit (CU) and/or a distributed unit (DU), and the NCR may be connected to the gNB. In the NCR, the MT may form a control link with the gNB, and the RU may form a forwarding link for backhaul with the gNB and a forwarding link for access with the UE.

The RU of the NCR may be composed of only an RF layer. The RU may receive a signal transmitted by the gNB through the forwarding link at the RF end and may forward the received signal to the UE. As a result, the signal received from the UE may be received by the RF end, and the received signal may be forwarded to the gNB. The RU may only transmit signals between the gNB and the UE, and may not generate signals/channels by itself and transmit the generated signals/channels to the gNB/UE. Alternatively, the RU receives signals/channels from the gNB/UE, but does not detect the received signals/channels. In order to forward the received signal, the RU may control the directions of the Tx/Rx beams, the DL/UL directions, ON/OFF information, transmission (Tx) power, etc. in the RF end. However, this RU operation cannot be determined by the NCR itself, and can be entirely controlled by the gNB.

The MT of the above NCR may include an RF layer and L1, L2, and/or L3 layers. For example, the MT may include only an RF layer and an L1 layer or may include the L1 and L2 layers. Alternatively, the MT may include an RF layer and L1/L2/L3 layers. The MT may detect/receive a signal/channel transmitted by the gNB and may generate a signal/channel to be transmitted to the gNB. In addition, the MT may receive information (e.g., side control information) necessary to control the operation of the RU from the gNB. Meanwhile, the MT may not perform transmission and reception with the UE.

FIG. 10 is a diagram illustrating the radio frequency (RF) repeater and the NCR.

Referring to FIG. 10(a), the existing RF repeater may perform beamforming to which an omni-direction or fixed direction is applied. In contrast, referring to FIG. 9(b), the NCR can adaptively adjust the transmission/reception beam directions of the NCR according to the UE position and the channel condition of the UE, thereby obtaining a beamforming gain.

In addition, in the case of the existing RF repeater, since the DL/UL directions are not distinguished from each other in the TDD system, transmission and reception in the DL and UL directions are always performed simultaneously. Alternatively, only the fixed TDD configuration is applied to the existing RF repeater, so that switching between the DL direction and UL direction has been performed using a fixed time pattern. In contrast, the NCR may perform DL/UL switching in consideration of a TDD configuration. Through this, switching is being considered. As a result, the NCR can enable adaptive DL/UL operation, may minimize power consumption caused by forwarding unnecessary signals, and may also minimize interference.

In addition, in the case of the existing RF repeater, the power of a signal that is received regardless of whether the gNB and the UE transmit signals is always amplified and transmitted. As a result, unnecessary power consumption and interference to the surroundings are unavoidably increased. In contrast, the NCR performs ON/OFF operations, and when there is no signal to be transmitted to the gNB and UE, the operation of the RU is turned off, so that unnecessary signals are not transmitted.

In addition, in the case of existing RF repeaters, power of a signal received at a fixed ratio is amplified and transmitted. When a signal is transmitted with unnecessarily large power, interference affecting the surroundings may decrease by reducing transmission (Tx) power of the NCR. When a signal is transmitted with low power, transmission (Tx) power of the NCR is increased so that the signal can be stably transmitted to the receiver.

In addition, the existing RF repeater has been operated without recognizing a DL/UL slot boundary. On the other hand, in order for the NCR to adaptively adjust beamforming, ON/OFF, DL/UL directions, transmission power, etc. as described above, the NCR must know transmission/reception (Tx/Rx) boundaries of a downlink (DL). As a result, the RU operation can be applied differently for each unit time (e.g., slot/symbol).

### Side control information for NCR

Hereinafter, the operation in the NCR will be assumed for convenience of description. However, the content described below can be applied to devices other than the NCR. In particular, the content described below can be applied for the operation of RIS. To this end, the NCR mentioned in the present disclosure can be replaced with 'RIS' and expanded/interpreted. In this case, the RU may serve to forward signals from the gNB to the UE in RIS and to forward signals from the UE to the gNB in RIS, and the MT may serve to receive side control information required for controlling signal transmission of the RU from the gNB. Meanwhile, the term "network" may hereinafter be interpreted as "gNB" or "CU/DU." In addition, the term "gNB" may hereinafter be interpreted as "network," "CU," or "DU."

In order for the NCR to forward the signal received by the RU, it may be considered that the directions of transmission/reception (Tx/Rx) beams, DL/UL directions, ON/OFF states, transmission (Tx) power, etc. are adjusted at the RF end. However, the RU operation cannot be determined by the NCR itself, and may be entirely controlled by the gNB. To this end, the MT may receive information (i.e., side control information) necessary to control the RU operation from the gNB. This side control information may be transmitted through L1/L2 signaling such as MAC-CE and DCI.

The above-described side control information may include all or part of the following information.
- Beamforming information: Information on the transmission/reception (Tx/Rx) beam direction of the RU

Here, beamforming information may include a beam direction for UL transmission to the gNB, a beam direction for DL reception from the gNB, a beam direction for DL transmission to the UE, and/or a beam direction for UL reception from the UE.
- Timing information to align transmission/reception boundaries of network-controlled repeater (NCR): Information for the RU to align transmission/reception (Tx/Rx) slots symbol boundaries
- Information on UL-DL TDD configuration: information on DL/UL directions of the RU
- ON-OFF information for efficient interference management and improved energy efficiency: Information on ON-OFF operations of the RU
- Power control information for efficient interference management: Information on transmission (Tx) power of the RU, and such information may include UL transmission (Tx) power to the gNB and/or DL transmission (Tx) power to the UE.

The NCR may be composed of two parts: an NCR-mobile termination (NCR-MT), which receives side control information from the gNB and transmits a report to the gNB, and an NCR-forwarding (NCR-Fwd), which receives a transmission signal from the gNB and forwards the signal to the UE or receives a transmission signal from the UE and forwards the signal to the gNB.

In this regard, the following scenarios may be considered.
- NCR-mobile termination (NCR-MT) may be defined as a functional entity that enables exchange of control information (e.g., side control information) by communicating with the gNB through a control link (C-link). The C-link is based on an NR Uu interface. For reference, the side control information is for at least control of an NCR-forwarding.
- NCR-forwarding (NCR-Fwd) is defined as a functional entity that amplifies and forwards a UL/DL RF signal between the gNB and the UE through a backhaul link and an access link. The operation of the NCR-Fwd may be controlled based on the side control information received from the gNB.

In NR, since cost efficiency is important for the NCR, it is assumed that the NCR uses an AF (amplify and forward) relay rather than a DF (decode and forward) relay. Therefore, a signal that the NCR-Fwd receives from the UE and transmits to the gNB is simply amplified and forwarded without decoding. As a result, there may be limitations in transmitting a transmission signal from the NCR-MT together on these transmission resources. For example, to multiplex the reception signal received from the UE and the transmission signal from the NCR-MT, the NCR-Fwd needs to know in advance the time/frequency domain or resource where the reception signal from the UE exists. Additionally, the synchronization between the reception signal and the transmission signal should be perfectly aligned. However, such recognition of the time/frequency resources for the reception signal and the synchronization alignment may not be allowed in the AF relay. Due to limitations on the power of the transmission signal of the NCR imposed by regulations, it may be difficult for UL transmission of the NCR-Fwd and UL transmission of the NCR-MT to occur on the same time resource. In this context, it may be assumed that the UL transmission of the NCR-MT and NCR-Fwd operates based on TDM.

### Transmission of HARQ-ACK for PDCCH at NCR and Configuration Method Therefor

In the present disclosure, when side control information (SCI) for the NCR is transmitted on a PDCCH, it may be assumed that HARQ-ACK transmission for the PDCCH is performed by the NCR over a PUCCH. In this case, a new DCI format may be introduced/defined for transmission of the SCI. Hereinafter, for cases where a new DCI format for the SCI is defined, a method for designing the contents of the DCI format and configuring information for HARQ-ACK transmission will be described in detail.

For the definition of the DCI format, three aspects may be considered. For example, the determination of a PUCCH transmission slot, the configuration of a PUCCH resource within the PUCCH transmission slot, and the configuration of a HARQ-ACK codebook may be considered. Considering these three aspects, the content to be included in the DCI format for transmitting the SCI and the operational perspective of the NCR will be described in detail.

First, the PUCCH transmission slot will be described. The PUCCH transmission slot may be a slot in which HARQ-ACK information is transmitted. To allow the NCR to transmit the HARQ-ACK for a PDCCH containing/carrying SCI received from the gNB over a PUCCH, the existing method for specifying the PUCCH transmission slot may be considered. That is, the position of a relative PUCCH transmission slot (hereinafter defined as a K1' offset) may be determined at slot-level granularity from a slot in which the NCR receives the DCI. For example, when the HARQ-ACK codebook is semi-static, the existing K1 value and SLIV are needed for pruning, i.e., to determine which HARQ-ACK bit corresponds to which PDSCH or PDCCH bit (for multiple HARQ-ACK bits that the UE reports over a PUCCH). In the case of a dynamic HARQ-ACK codebook, since the T-DAI (and/or C-DAI) is indicated in DCI without pruning, the existing K1 value may still be needed. The existing K1 value and SLIV value on the PDSCH may be indicated via DCI to indicate which row of PDSCH-TimeDomainResourceAllocation from multiple PDSCH-TimeDomainResourceAllocations entries preconfigured by RRC for the UE. However, when the gNB transmits the SCI over the PDSCH (i.e., when a DL grant is included in the DCI), the existing DL grant DCI formats (e.g., DCI format 1_0, 1_1, 1_2, etc.) may be used. In contrast, when the gNB transmits the SCI via the PDCCH instead of the PDSCH, the PDCCH may not need to schedule the PDSCH, and therefore, the DL grant may not be included in the PDCCH. In other words, it may not be necessary for the K0 value to be indirectly indicated through PDSCH time domain resource allocation (TDRA) as in the existing mechanism. On the other hand, a DCI field for indicating the K0 value through TDRA may be 4 bits. Additionally, maxNrofDL-Allocations that may be configured for the UE may be 16.

The existing HARQ-ACK timing will be explained again. As explained with reference to FIG. 7, the HARQ-ACK timing may be defined based on two parameters, K0 and K1. The two parameters may represent a DL grant PDCCH to corresponding PDSCH transmission and a PDSCH to the slot with the corresponding HARQ-ACK transmission at slot granularity, respectively. In other words, a HARQ-ACK transmission slot may be determined as a slot after K0+K1 slots from the slot in which the DL grant PDCCH is transmitted. Here, the K0 and K1 values may be determined/configured based on the UE processing time according to the capability. K0 and K1 values may be indicated through DCI. Specifically, the K0 value is indicated as follow. The row index of PDSCH-TimeDomainResourceAllocationList configured by RRC is indicated through the time domain resource assignment field of a PDSCH in DL grant DCI. An IE corresponding to the row index specifies the K0 value (i.e., slot offset between the DCI and its scheduled PDSCH). If the field related to the K0 value is absent, the UE may apply a value of 0 for K0. The time domain resource assignment is 4 bits, and the maximum number of PDSCH-TimeDomainResourceAllocationList entries (i.e., maxNrofDL-Allocations) may be 16. To specify the K1 value, either dl-DataToUL-ACK or dl-DataToUL-ACKForDCIFormat1_2 is indicated through the PDSCH-to-HARQ feedback timing indicator field in the DL grant DCI, with a maximum of 3 bits. In other words, the K0 and K1 values may be determined/configured by the values of the IE configured by RRC, which are indicated in the DCI. According to a specific scenario (3GPP), the K0 and K1 values may range from a minimum of 5 bits to a maximum of 7 bits.

The K1 value needs to be configured with consideration of the processing time. The capability related to the UE processing time may include N1 and/or N2. Specifically, N1 and N2, which are the capabilities related to the symbol granularity of the processing time expected to be reported by the NCR to the gNB, may be defined as follows.
- N1: Number of OFDM symbols required for UE processing from the end of PDSCH reception to the earliest possible start of the corresponding HARQ-ACK transmission from UE perspective
- N2: Number of OFDM symbols required for UE processing from the end of PDCCH reception containing UL grant to the earliest possible start of the corresponding PUSCH transmission from UE perspective

As a capability report, N1 may be reported as either capability 1 (baseline UE processing time capability) or capability 2 (aggressive UE processing time capability) for each SCS (and/or for the cases of Front-loaded DMRS only and Front-loaded DMRS + additional DMRS).

In this context, when the transmission position of an ACK bit is determined based on K1 in a semi-static codebook, a K1 offset value may be determined/configured considering various factors, such as DCI overhead reduction and the maintenance of the existing framework.

Additionally, regarding the method of configuring a PUCCH resource within a PUCCH transmission slot, the PUCCH resource may be designated based on a PRI, a CCE index, and a UCI payload. Specifically, the indication method may be divided into two stages: before and after a dedicated PUCCH resource configuration. For example, before the dedicated PUCCH resource configuration, a resource set is indicated with 4-bit RMSI, and the 3-bit PRI indicates which subset is used within the indicated resource set. Subsequently, a specific PUCCH resource to be used within the indicated subset may be indicated by the CCE index. In contrast, after the dedicated PUCCH resource configuration, 32 PUCCH resources may be configured in the first PUCCH resource set, and up to 8 PUCCH resources may be configured in each of the second to fourth PUCCH resource sets. Among the PUCCH resource sets, if the UCI payload is less than 2, the first PUCCH resource set is used. If the UCI payload is larger than 2, a PUCCH resource set to be used is determined based on predetermined values according to the size of the UCI payload. When the first PUCCH resource set is used, the 3-bit PRI indicates which subset within the PUCCH resource set is to be used, and based on the CCE index, a specific PUCCH resource to be selected/used within the indicated subset may be determined. On the other hand, when the second to fourth PUCCH resource sets are used/indicated, a PUCCH resource to be used within the PUCCH resource set may be indicated by the PRI without considering the CCE index.

In summary, when the existing mechanism for transmitting a HARQ-ACK for a PDSCH is used to transmit HARQ-ACK information for the received PDCCH, the following information may be required.
- HARQ-ACK transmission slot: The location of a slot for transmitting a HARQ-ACK needs to be determined. The existing UE receives information about K0 and K1 via DCI and may determine the HARQ-ACK transmission slot as a slot after K0+K1 slots from the slot in which the PDCCH is received.
- PUCCH resource: A PUCCH resource for transmitting HARQ-ACK information may be determined from among various PUCCH resources. To achieve this, the existing UE may receive PRI information via DCI.
- HARQ-ACK codebook: Information about the number of bits constituting entire HARQ-ACK information and the positions of bits for transmitting HARQ-ACK information may be required. To achieve this, when a semi-static HARQ codebook is used, the UE may receive the following information from the gNB.
   --K1: The K1 value is indicated through a PDSCH-to-HARQ feedback timing indicator field in DCI.
   -- SLIV: Information is needed about which SLIV is used for transmitting the HARQ-ACK for the PDSCH among SLIVs configured by each row index (i.e., TDRA index) in a TDRA table. The bit positions of the HARQ-ACK information to be transmitted is determined based on symbol resources that constitute the indicated SLIV. The UE may receive the SLIV through a TDRA field in DCI.

Alternatively, when a dynamic HARQ codebook is used, a DAI may be required. In this case, to indicate the DAI, C-DAI and T-DAI values may be needed. The UE may receive the C-DAI and T-DAI values through a DAI field in DCI.

Based on the methods mentioned above and methods to be described later, the BS may set some of the parameters: {K0, SLIV, K1, PRI, C-DAI, T-DAI} for the UE through RRC, and specific values for these parameters may be indicated/designated through DCI. Based on the parameters (or parameter values) indicated/configured through RRC, the UE or NCR-MT may calculate/determine/select candidate resources for A/N feedback. Among these candidate resources, the UE may transmit a PUCCH including A/N on a PUCCH resource indicated/designated based on the parameters for A/N feedback indicated through the DCI,

Based on the aforementioned content, a method for the NCR to transmit a HARQ-ACK for a PDCCH carrying SCI received from the gNB over a PUCCH may consider the following Scenario 1 and Scenario 2.

### 1. Scenario 1

In Scenario 1, the NCR may be configured with a HARQ-ACK codebook according to the existing codebook configuration method. The HARQ-ACK for a PDCCH carrying/transmitting SCI may be combined with other HARQ-ACKs.

In Scenario 1, when the NCR-MT transmits the HARQ-ACK for a new DCI format related to a PDCCH carrying SCI, the HARQ-ACK may be combined with the HARQ-ACK for another PDCCH or PDSCH. To achieve this, the existing HARQ-ACK transmission method needs to be maintained. However, DCI included in the PDCCH carrying/transmitting SCI (hereinafter, DCI for SCI) may not schedule a PDSCH, and it may not be used for multiple purposes like the existing HARQ-ACK PDCCH (e.g., a PDCCH for Scell dormancy, SPS PDSCH release, TCI state update). In this case, if the DCI for SCI is based on the existing DCI format, unnecessary information may be included. Therefore, the present disclosure proposes a method capable of reducing the overhead of a DCI format for SCI while ensuring coexistence with the existing HARQ-ACK. For example, in order to coexist with the existing HARQ-ACK, the DCI for SCI needs to reuse the existing PUCCH resource indication method. That is, the DCI for SCI should include the aforementioned PRI, and the existing method of selecting/indicating a PUCCH resource set and PUCCH resources may be reused.

Scenario 1 may be explained in three main cases. Firstly, regarding the NCR, the following cases may be considered: Case 1 where only a semi-static (type-1) HARQ-ACK codebook is applicable (i.e., the NCR supports only the semi-static (type-1) HARQ-ACK codebook); and Case 2 where only a dynamic (type-2) HARQ-ACK codebook is applicable (i.e., the NCR supports only the dynamic (type-2) HARQ-ACK codebook). Both of these two cases offer the advantage of reducing the complexity of the NCR, but the methods have the disadvantage of not inheriting the existing configuration. To address this disadvantage, Case 3 is considered, where both the semi-static (type-1) HARQ-ACK codebook and the dynamic (type-2) HARQ-ACK codebook are supported. Hereinafter, the existing method for selecting/indicating a PUCCH resource set and PUCCH resources will be explained for each of Case 1, Case 2, and Case 3.

### (1) Case 1-1: A case where only the semi-static (type-1) HARQ-ACK codebook is applicable.

In Case 1-1, it is considered that only the semi-static (type-1) HARQ-ACK codebook is supported for the NCR. That is, the NCR may support only the type-1 HARQ-ACK codebook through a capability report or a prior agreement (consensus). In this case, it is assumed that HARQ-ACK fallback for the existing semi-static codebook is not supported for the NCR. In other words, even when the NCR supports the existing HARQ-ACK fallback, the NCR may still transmit a HARQ-ACK based on the semi-static HARQ-ACK codebook.
- Only a single PDCCH/PDSCH is received in Pcell
- the PDCCH/PDSCH is scheduled by fallback DCI
- the DCI is containing the C-DAI value of 1

The NCR may be configured not to frequently transmit a HARQ-ACK for operations such as UL TDM. In this case, the NCR may include many bits in a single HARQ-ACK report. For the purpose of reducing the complexity of the NCR and easing the configuration, it is considered that only the semi-static HARQ-ACK codebook is supported for the NCR. Since the transmission position of (HARQ) ACK bits is determined according to K1 in the semi-static HARQ-ACK codebook, it may not be appropriate to set the K1' offset (PDCCH to HARQ-ACK timing) to any arbitrary value.

In this case, the DCI for SCI (or DCI for the PDCCH carrying SCI) needs to include information on the SLIV of the PDSCH, K0, and K1. On the other hand, the DCI for SCI (or DCI for the PDCCH carrying SCI) may not require fields for the C-DAI and T-DAI. Therefore, when only the semi-static HARQ-ACK codebook is applicable for the NCR, it may be assumed that the DCI for SCI may not include T-DAI and C-DAI fields. In this case, the gNB may provide the HARQ ACK transmission timing to the NCR via the DCI for SCI, which includes the information on the SLIV of the PDSCH, K0, and K1, based on at least one of the following alternatives.

### 1) Alternative 1-1

In Alternative 1-1, the DCI for SCI may indicate {SLIV of PDSCH, K0} and K1 in a manner similar to or identical to the existing DL grant DCI.

Specifically, the DCI for SCI may include a field that indicates a specific row index in PDSCH-TimeDomainResourceAllocation configured by RRC (a field for indicating the SLIV of the PDSCH and K0) and a field that indicates the index of dl-DataToUL-ACK or dl-DataToUL-ACK-DCI-1-2 in PUCCH-Config configured by RRC (a field for indicating K1). That is, in Alternative 1-1, the DCI for SCI may define the existence of dedicated fields for the contents of the existing DCI format and the method of indicating the contents as shown in Table 7 below.

**[Table 7]**

| **Contents** | **Existence of fields for contents in new DCI format for PDCCH carrying SCI and indication method** |
|---|---|
| SLIV of PDSCH, K0 | Dedicated field for indicating row index of *PDSCH-TimeDomainResourceAllocation* |
| K1 | Dedicated field for indicating index of dl-DataToUL-ACK or dl-DataToUL-ACK-DCI-1-2 in PUCCH-Config |
| C-DAI, T-DAI | None |
| PRI | Dedicated field for indicating 3-bit PRI |

### 2) Alternative 1-2

In Alternative 1-2, the DCI for SCI indicates K1 in the same way as the existing DL grant DCI, but the DCI for SCI may not indicate {SLIV of PDSCH, K0} in the same way as the existing DL grant DCI.

Specifically, the DCI for SCI includes a field that indicates the index of dl-DataToUL-ACK or dl-DataToUL-ACK-DCI-1-2 in PUCCH-Config configured by RRC (a field for indicating K1), but the DCI for SCI may not include a field that indicates a specific row index in *PDSCH-TimeDomainResourceAllocation* configured by RRC (a field for indicating the SLIV of the PDSCH and K0).

Alternatively, the DCI for SCI may have a dedicated field for the SLIV of the PDSCH and K0, but in contrast to the existing DCI, the dedicated field may only indicate the K0 value. The dedicated field may directly indicate the K0 value based on a specified bit width, or the dedicated field may indicate one of candidate K0 values based on a prior agreement. For example, if N bits are allocated to the dedicated field, 2^{N} candidate K0 values may be agreed upon in advance. In this case, one of the candidate K0 values may be indicated based on the value indicated by the dedicated field. The SLIV may be configured based on a predefined rule. According to the predefined rule, the SLIV may be preset as a specific SLIV, an SLIV corresponding to the entire slot, an SLIV that only exists in the first symbol of the slot, or an SLIV that only exists in the last symbol of the slot. Alternatively, the SLIV may be set to an SLIV value that includes the most symbols among candidate SLIV values for the PDSCH configured by RRC, based on the predefined rule.

Alternatively, the DCI for SCI may include the dedicated field for the SLIV of the PDSCH and K0, but in contrast to the existing DCI, the dedicated field may only indicate the SLIV value. The dedicated field may directly indicate the SLIV value based on the specified bit width, or the dedicated field may indicate one of candidate SLIV values based on a prior agreement. For example, if N bits are allocated to the dedicated field, 2^{N} candidate SLIV values may be agreed upon in advance. In this case, based on the value indicated by the dedicated field, one of the candidate SLIV values may be indicated. Meanwhile, K0 may be configured based on a predefined rule. In this case, to indicate the SLIV value according to the specified bit width, it may be considered that the dedicated field indicates one of the candidate SLIV values based on a prior agreement. For example, if N bits are allocated to the field, 2^{N} candidate SLIV values may be agreed upon in advance, and based on the value indicated by the field, one of the candidate SLIV values may be selected. The K0 value may be defined/configured according to the predefined rule. For example, according to the predefined rule, K0 may always be set to 0, and in this case, K1 indicated through the DCI for SCI may be the PDCCH-to-HARQ-ACK timing (K1' offset). Alternatively, according to the predefined rule, K0 may be fixed to a specific value other than 0.

Alternatively, the DCI for SCI may not include the dedicated field for the SLIV of the PDSCH and K0, and both the SLIV and K0 values may be configured/defined based on a predefined rule. For example, according to the predefined rule, the SLIV may be configured/defined as a specific SLIV, a value corresponding to the entire slot, an SLIV value that only exists in the first symbol of the slot, or an SLIV value that only exists in the last symbol of the slot. Alternatively, the SLIV may be set to an SLIV value that includes the most symbols among candidate SLIV values for the PDSCH configured by RRC, based on the predefined rule. Additionally, according to the predefined rule, K0 may always be configured/defined as 0, and in this case, K1 indicated through the DCI for SCI may be the PDCCH-to-HARQ-ACK timing (K1' offset). Alternatively, according to the predefined rule, K0 may be fixed to a specific value other than 0. Alternatively, {K0, SLIV} may be set/determined as {K0, SLIV} defined for the lowest or highest row index in the TDRA table, even without separate indications.

In this way, in Alternative 1-2, the DCI for SCI may define the existence of dedicated fields for the contents of the existing DCI format and the method of indicating the contents as shown in Table 8 below.

**[Table 8]**

| **Contents** | **Existence of fields for contents in new DCI format for PDCCH carrying SCI and indication method** |
|---|---|
| SLIV of PDSCH, K0 | Option 1. There is no dedicated field due to application of values determined based on predefined rule |
| | Option 2. Dedicated field exists, but K0 value or SLIV value is indicated differently from existing method |
| K1 | Dedicated field for indicating index of dl-DataToUL-ACK or dl-DataToUL-ACK-DCI-1-2 in PUCCH-Config |
| C-DAI, T-DAI | None |
| PRI | Dedicated field for indicating 3-bit PRI |

### 3) Alternative 1-3

In Alternative 1-3, the DCI for SCI indicates {SLIV of PDSCH, K0} in the same way as the existing DL grant DCI, but the DCI for SCI may indicate K1 in a method different from the existing DL grant DCI.

Specifically, the DCI for SCI includes a field that indicates a specific row index in PDSCH-TimeDomainResourceAllocation configured by RRC (a field for indicating the SLIV of the PDSCH and K0), but the DCI for SCI may not include a field that indicates the index of dl-DataToUL-ACK or dl-DataToUL-ACK-DCI-1-2 (refer to TS.38.331) in PUCCH-Config configured by RRC (a field for indicating K1). In this case, K1 may be configured/determined based on a pre-agreed or agreed-upon value. For example, K1 may be derived from the N1 value reported by the NCR (the number of OFDM symbols required for UE processing from the end of PDSCH reception to the earliest possible start of the corresponding HARQ-ACK transmission from the UE perspective). Since the N1 value is at symbol granularity, K1 may be set/determined as a value obtained by converting the N1 value into slots. For example, if N1 is 17 (symbols), when N1 is converted to slot units, N1 may be 1 slot (14 symbols) + 3 symbols. By rounding up the converted value to slot units (or applying ceil(N1)), N1 converted in slot units may be considered as 2 slots. In this case, K1 may be set/determined as 3 (or 2). Alternatively, the K1 and K0 values (and/or the SLIV of the PDSCH) may be pre-mapped to each other, and based on the mapping, K1 may be determined/set as a value corresponding to the K0 value (and/or the SLIV of the PDSCH) indicated in the DCI for SCI. The mapping relationship between the K1 and K0 values (and/or the SLIV of the PDSCH) may be configured by the BS (gNB) through RRC or DCI, etc. Alternatively, K1 may be determined/set as the largest (or smallest) value within a preconfigured K1 range (or among K1 values configured through RRC signaling).

Alternatively, the DCI for SCI may have a dedicated field for K1, but in contrast to the existing method, the dedicated field may only indicate the K1 value. In this case, the dedicated field may directly indicate the K1 value according to a specified bit width. Alternatively, one of candidate values for K0 may be indicated based on a prior agreement. For example, if N bits are allocated to the dedicated field, 2^{N} candidate K1 values may be agreed upon in advance, and based on the value indicated by the dedicated field, one of the candidate K1 values may be selected.

In this way, in Alternative 1-3, the DCI for SCI may define the existence of dedicated fields for the contents of the existing DCI format and the method of indicating the contents as shown in Table 9 below.

**[Table 9]**

| **Contents** | **Existence of fields for contents in new DCI format for PDCCH carrying SCI and indication method** |
|---|---|
| SLIV of PDSCH, K0 | Dedicated field for indicating row index of *PDSCH-TimeDomainResourceAllocation* |
| K1 | Option 1. There is no dedicated field due to application of values determined based on predefined rule |
| | Option 2. Dedicated field exists, but K0 value is indicated differently from existing method |
| C-DAI, T-DAI | None |
| PRI | Dedicated field for indicating 3-bit PRI |

### 4) Alternative 1-4

In Alternative 1-4, the DCI for SCI may not indicate {SLIV of PDSCH, K0} and K1 in the same way as the existing DL grant DCI.

Specifically, the DCI for SCI may not include a field that indicates a specific row index in *PDSCH-TimeDomainResourceAllocation* configured by RRC (a field for indicating the SLIV of the PDSCH and K0) and a field that indicates the index of dl-DataToUL-ACK or dl-DataToUL-ACK-DCI-1-2 in PUCCH-Config configured by the RRC (a field for indicating K1).

Specifically, the DCI for SCI does not have a dedicated field for the SLIV of the PDSCH and K0, and both the SLIV and K0 values may be determined based on a predefined rule. For example, the SLIV value may be determined/assumed as a specific SLIV value based on the predefined rule. Alternatively, the SLIV value may be set/defined as a value corresponding to the entire slot, an SLIV value that only exists in the first symbol of the slot, or an SLIV value that only exists in the last symbol of the slot. Alternatively, the SLIV may be set to an SLIV value that includes the most symbols among candidate SLIV values for the PDSCH configured by RRC, based on the predefined rule. Additionally, according to the predefined rule, K0 may always be set/defined as 0, and in this case, K1 indicated through the DCI for SCI may be the PDCCH-to-HARQ-ACK timing (K1' offset). Alternatively, according to the predefined rule, K0 may be fixed to a specific value other than 0. Alternatively, {K0, SLIV} may be set/determined as {K0, SLIV} defined for the lowest or highest row index in the TDRA table, even without separate indications.

Alternatively, the DCI for SCI may have the dedicated field for the SLIV of the PDSCH and K0. However, in contrast to the existing method, the dedicated field may only indicate the K0 value, and the SLIV may be configured/determined based on a predefined rule. In this case, the dedicated field may directly indicate the K0 value based on a specified bit width, or one of candidate K0 values may be indicated based on a prior agreement. For example, if N bits are allocated to the dedicated field, 2^{N} candidate K0 values may be agreed upon/defined in advance, and based on the value indicated in the dedicated field, one of the 2^{N} candidate K0 values may be selected/configured. Meanwhile, the SLIV value may be determined/assumed as a specific SLIV value based on the predefined rule. Alternatively, the SLIV value may be set/defined as a value corresponding to the entire slot, an SLIV value that only exists in the first symbol of the slot, or an SLIV value that only exists in the last symbol of the slot. Alternatively, the SLIV may be set to an SLIV value that includes the most symbols among candidate SLIV values for the PDSCH configured by RRC, based on the predefined rule.

Alternatively, the DCI for SCI may include the dedicated field for the SLIV of the PDSCH and K0, but in contrast to the existing method, the dedicated field may only indicate the SLIV value. For example, the dedicated field may directly indicate the SLIV value based on the specified bit width, or one of the candidate SLIV values may be indicated based on a prior agreement. For example, if N bits are allocated to the dedicated field, 2^{N} candidate SLIV values may be agreed upon/defined in advance, and based on the value indicated in the dedicated field, one of the 2^{N} candidate SLIV values may be selected/configured. Meanwhile, according to a predefined rule, K0 may always be set/defined as 0, and in this case, K1 indicated through the DCI for SCI may be the PDCCH-to-HARQ-ACK timing (K1' offset). Alternatively, according to the predefined rule, K0 may be fixed to a specific value other than 0.

Additionally, the DCI for SCI may include a dedicated field for K1, but in contrast to the existing method, this dedicated field may only indicate the K1 value. In this case, the dedicated field may directly indicate the K1 value based on the specified bit width. Alternatively, based on a prior agreement, one of the candidate K0 values may be indicated. For example, if N bits are allocated to the dedicated field, 2^{N} candidate K1 values may be agreed upon/defined in advance, and based on the value indicated in the dedicated field, one of the 2^{N} candidate K1 values may be selected/configured.

Alternatively, the DCI for SCI may not include the dedicated field for K1. In this case, the K1 value may be determined/configured based on a prior agreement or consensus. For example, K1 may be derived from the N1 value reported by the NCR (the number of OFDM symbols required for UE processing from the end of PDSCH reception to the earliest possible start of the corresponding HARQ-ACK transmission from the UE perspective). In this case, since the N1 value is at symbol granularity, K1 may be set/determined as a value converted from the N1 value into slots. For example, if N1 is 17 (symbols), when converted to slot units, it may be 1 slot (14 symbols) + 3 symbols. By rounding up the converted value to slot units (or applying ceil(N1)), N1 converted in slot units may be considered as 2 slots. In this case, K1 may be set/determined as 3 (or 2). The K1 and K0 values (and/or the SLIV of the PDSCH) may be pre-mapped to each other. Based on the mapping, K1 may be determined/set as a value corresponding to the K0 value (and/or the SLIV of the PDSCH) indicated in the DCI for SCI. The mapping relationship between the K1 and K0 values (and/or the SLIV of the PDSCH) may be configured by the gNB through RRC or DCI. Alternatively, K1 may be determined/set as a specific value, either the largest or smallest value, within a preconfigured K1 range (or among the K1 values).

In this way, in Alternative 1-4, the DCI for SCI may define the existence of dedicated fields for the contents of the existing DCI format and the method of indicating the contents as shown in Table 10 below,

**[Table 10]**

| **Contents** | **Existence of fields for contents in new DCI format for PDCCH carrying SCI and indication method** |
|---|---|
| SLIV of PDSCH, K0 | Option 1. There is no dedicated field due to application of values determined based on predefined rule |
| | Option 2. Dedicated field exists, but K0 value is indicated differently from existing method |
| K1 | Option 1. There is no dedicated field due to application of values determined based on predefined rule |
| | Option 2. Dedicated field exists, but K1 value is indicated differently from existing method |
| C-DAI, T-DAI | None |
| PRI | Dedicated field for indicating 3-bit PRI |

### (2) Case 1-2: A case where only the dynamic (type-2) HARQ-ACK codebook is applicable for NCR.

In Case 1-2, the NCR may support only the dynamic (type-2) HARQ-ACK codebook. That is, the NCR supporting only the type-2 HARQ-ACK codebook may be considered based on a capability report. Alternatively, it may be assumed that the NCR supports only the type-2 HARQ-ACK codebook based on a prior agreement or consensus.

Depending on the contents indicated to the NCR through SCI, since the NCR is a network device, the NCR may not require frequent indications through the SCI. Therefore, the NCR may be configured not to transmit a HARQ-ACK frequently. This means that variability in HARQ-ACK bits may be essential. Additionally, to reduce the complexity of the NCR and facilitate the configuration, it may be necessary for the NCR to support only the type-2 HARQ-ACK codebook.

In this case, DCI for SCI does not require the SLIV of a PDSCH, but the DCI for SCI needs to include information on K0 and K1 as well as the T-DAI and/or C-DAI. Therefore, when only the dynamic (type-2) HARQ-ACK codebook is applicable for the NCR, it may be assumed that the DCI for SCI does not have a dedicated field that directly indicates the SLIV of the PDSCH.

The K0 value may be configured by at least one of the methods listed in Alternative 1-1, Alternative 1-2, Alternative 1-3, and Alternative 1-4 of Case 1-1. That is, according to the existing DL grant method, the K0 value may be indicated through a dedicated field for indicating a specific row index in the TDRA table configured by PDSCH-TimeDomainResourceAllocationList configured by RRC. Alternatively, a predetermined value may be applied according to a predefined rule without the dedicated field, or it may be considered that the dedicated field exists, but the K0 value is indicated differently from the existing method.

The K1 value may be configured by at least one of the methods listed in Alternative 1-1, Alternative 1-2, Alternative 1-3, and Alternative 1-4 of Case 1-1. That is, according to the existing DL grant method, the K1 value may be indicated through a dedicated field for indicating the index of dl-DataToUL-ACK or dl-DataToUL-ACK-DCI-1-2 in PUCCH-Config. Alternatively, a predetermined value may be applied according to a predefined rule without the dedicated field, or it may be considered that the dedicated field exists, but the K1 value is indicated differently from the existing method.

It may be considered that the T-DAI and/or C-DAI are indicated differently from Case 1-1. That is, it may be considered that the C-DAI and/or {T-DAI, C-DAI} are indicated in the same way as dedicated fields used to indicate the T-DAI and/or C-DAI in existing fallback/non-fallback DCI. In other words, a DCI format for SCI may indicate the C-DAI through the dedicated field in the same way as indicated in the fallback DCI, or the DCI format for SCI may indicate {T-DAI, C-DAI} through the dedicated field in the same way as indicated in the non-fallback DCI. Alternatively, it may be considered that the dedicated field exists, but only the T-DAI is indicated differently from the existing method.

In Case 1-2, the DCI for SCI may define the existence of dedicated fields for each content and the method of indicating the contents as shown in Table 11. It may be considered that the options in each column are applied independently.

**[Table 11]**

| **Contents** | **Existence of fields for contents in new DCI format for PDCCH carrying SCI and indication method** |
|---|---|
| SLIV of PDSCH, K0 | Option 1. K0 value is indicated through dedicated field for indicating row index of PDSCH-TimeDomainResourceAllocation |
| | Option 2. There is no dedicated field due to application of values determined based on predefined rule |
| | Option 3. Dedicated field exists, but K0 value is indicated differently from existing method |
| K1 | Option 1. Dedicated field for indicating index of dl-DataToUL-ACK or dl-DataToUL-ACK-DCI-1-2 in PUCCH-Config |
| | Option 2. There is no dedicated field due to application of values determined based on predefined rule |
| | Option 3. Dedicated field exists, but K1 value is indicated differently from existing method |
| C-DAI, T-DAI | Option 1. C-DAI or {T-DAI, C-DAI} is indicated in same way as indicated by dedicated field in existing fallback/non-fallback DCI |
| | Option 2. Dedicated field exists, but only T-DAI is indicated |
| PRI | Dedicated field for indicating 3-bit PRI |

### (3) Case 1-3: A case where the NCR is capable of applying both the semi-static (Type-1) and dynamic (Type-2) HARQ-ACK codebooks.

It is possible to consider a case where the NCR supports both the semi-static (Type-1) HARQ-ACK codebook and the dynamic (Type-2) HARQ-ACK codebook. In this case, to support combining with other HARQ-ACKs (and to support both the Type-1 and Type-2 HARQ-ACK codebooks), the DCI for SCI needs to indicate the SLIV of the PDSCH, K0, K1, and the C-DAI (and/or T-DAI).

The SLIV (or PDSCH for SLIV) may be configured by at least one of the methods listed in Alternative 1-1, Alternative 1-2, Alternative 1-3, and Alternative 1-4 of Case 1-1. That is, according to the existing DL grant method, the SLIV (or PDSCH for SLIV) value may be indicated through a dedicated field for indicating the row index of PDSCH-TimeDomainResourceAllocation. Alternatively, a predetermined value may be applied according to a predefined rule without the dedicated field, or it may be considered that the dedicated field exists, but the SLIV (or PDSCH for SLIV) value is indicated differently from the existing method.

The K0 value may be configured by at least one of the methods listed in Alternative 1-1, Alternative 1-2, Alternative 1-3, and Alternative 1-4 of Case 1-1. That is, according to the existing DL grant method, the K0 value may be indicated through a dedicated field for indicating the row index of PDSCH-TimeDomainResourceAllocation. Alternatively, a predetermined value may be applied according to a predefined rule without the dedicated field, or it may be considered that the dedicated field exists, but the K0 value is indicated differently from the existing method.

The K1 value may be configured by at least one of the methods listed in Alternative 1-1, Alternative 1-2, Alternative 1-3, and Alternative 1-4 of Case 1-1. That is, according to the existing DL grant method, the K1 value may be indicated through a dedicated field for indicating the index of dl-DataToUL-ACK or dl-DataToUL-ACK-DCI-1-2 in PUCCH-Config. Alternatively, a value determined according to a predefined rule may be applied without the dedicated field, or it may be considered that the dedicated field exists, but the K1 value is indicated differently from the existing method.

The T-DAI and/or C-DAI may be indicated according to the methods mentioned in Case 1-2. It may be considered that the C-DAI and/or {T-DAI, C-DAI} are indicated in the same way as the dedicated fields used in the existing fallback/non-fallback DCI for indicating the T-DAI and/or C-DAI. That is, the DCI format for SCI may indicate the C-DAI through a dedicated field in the same way as indicated in the fallback DCI, or it may indicate {T-DAI, C-DAI} through a dedicated field in the same way as indicated in the non-fallback DCI. Alternatively, the dedicated field may exist, but only the T-DAI is indicated differently from the existing method.

In Case 1-3, the DCI for SCI may define the existence of dedicated fields for each content and the method of indicating the contents as shown in Table 12. It may be considered that the options in each column are applied independently.

**[Table 12]**

| **Contents** | **Existence of fields for contents in new DCI format for PDCCH carrying SCI and indication method** |
|---|---|
| SLIV of PDSCH, K0 | Option 1. K0 value and SLIV of PDSCH are indicated through dedicated field for indicating row index of PDSCH-TimeDomainResourceAllocation |
| | Option 2. There is no dedicated field due to application of values determined based on predefined rule |
| | Option 3. Dedicated field exists, but K0 or SLIV value is indicated differently from existing method |
| K1 | Option 1. Dedicated field for indicating index of dl-DataToUL-ACK or dl-DataToUL-ACK-DCI-1-2 in PUCCH-Config. |
| | Option 2. There is no dedicated field due to application of values determined based on predefined rule |
| | Option 3. Dedicated field exists, but K1 value is indicated differently from existing method |
| C-DAI, T-DAI | Option 1. C-DAI or {T-DAI, C-DAI} is indicated in same way as indicated by dedicated field in existing fallback/non-fallback DCI |
| | Option 2. Dedicated field exists, but only T-DAI is indicated |
| PRI | Dedicated field for indicating 3-bit PRI |

### 2. Scenario 2

In Scenario 2, the NCR may be configured with a HARQ-ACK codebook according to the existing codebook configuration method, but the HARQ-ACK for DCI for SCI (or a PDCCH carrying SCI) may not be combined with other HARQ-ACKs.

In Scenario 2, a specific codebook (for example, type-1 HARQ-ACK codebook or type-2 HARQ-ACK codebook) may always be used. However, considering a case where only the Type-1 HARQ-ACK codebook is used, the PDCCH carrying SCI for the NCR may not be received frequently. In this case, only a small number of HARQ-ACK bits may be included compared to the size of the HARQ-ACK codebook, and scheduling the PDCCH carrying SCI to match the size of the HARQ-ACK codebook may be redundant and impose scheduling constraints. Therefore, in Scenario 2, when transmitting the HARQ-ACK for the DCI for SCI (or the PDCCH carrying SCI), the NCR needs to be configured to apply/use only the Type-2 HARQ-ACK codebook.

In contrast to Case 1-2 of Scenario 1, even if the NCR supports both the type-1 and type-2 HARQ-ACK codebooks or is configured with the semi-static (Type-1) HARQ-ACK codebook through an RRC configuration, it may be assumed that the NCR (or NCR-MT) will perform HARQ-ACK fallback transmission to transmit the HARQ-ACK for the DCI for SCI. In this case, the NCR (or NCR-MT) may assume/expect that the network or gNB will perform appropriate scheduling such that the HARQ-ACK for the DCI for SCI does not collide with other HARQ-ACK transmissions.

### (1) Case 2-1: A case where HARQ-ACK codebook combining is never performed for the HARQ-ACK for the DCI for SCI.

In Case 2-1, the HARQ-ACK for the DCI for SCI (or the HARQ-ACK for the PDCCH carrying SCI) is essentially a dedicated HARQ-ACK with a 1-bit payload, and therefore, it may not be necessary to indicate at least one of pre-agreed specific PUCCH resources through a PRI. In other words, the PUCCH resource may be designated according to a predefined rule. In this case, the NCR may always assume that a specific PRI is indicated for the HARQ-ACK for the DCI for SCI, even if there is no PRI indication. For example, even if a PRI field is not included/defined in the DCI for SCI, the NCR may always assume or determine that the PRI is 1. Additionally, regarding implicit PUCCH resource selection due to a CCE index, the NCR may assume or determine that a specific PUCCH resource, which is configured (in advance) via RRC, is indicated or has been indicated, regardless of the CCE index for the DCI for SCI. Alternatively, the NCR may determine that the indication of the PUCCH resource based on the CCE index is valid. That is, the NCR may decide/select the PRI for the DCI for SCI based on a predefined rule and select/determine the PUCCH resource, or the NCR may select/determine the PUCCH resource based on the CCE index of the DCI.

Additionally, since the HARQ-ACK for the DCI for SCI always has a 1-bit payload, a dedicated field for indicating the C-DAI and/or T-DAI in the DCI may not be necessary. For example, the DCI for SCI may not have indications/configurations for the SLIV of the PDSCH, K0, K1, the C-DAI, the T-DAI, or the PRI. In this case, the NCR-MT may transmit a HARQ-ACK with a 1-bit payload based on the type-2 HARQ-ACK codebook for a slot after a specific slot offset based on a prior agreement from the time of receiving of the DCI, using a PUCCH resource determined based on a prior agreement,

Alternatively, for scheduling flexibility, in Scenario 2, K0 and/or K1 may be determined/configured based on a predefined rule (or based on a dedicated field), similar to the method applied in Case 1-2 of Scenario 1. That is, in Case 2-1 of Scenario 2, the DCI for SCI may define the existence of dedicated fields for each content and the method of indicating the contents as shown in Table 13. The options in each column of Table 13 may be applied independently.

**[Table 13]**

| **Contents** | **Existence of fields for contents in new DCI format for PDCCH carrying SCI and indication method** |
|---|---|
| SLIV of PDSCH, K0 | Option 1. There is no dedicated field due to application of values determined based on predefined rule |
| | Option 2. Dedicated field exists, but K0 value is indicated differently from existing method |
| K1 | Option 1. Dedicated field for indicating index of dl-DataToUL-ACK or dl-DataToUL-ACK-DCI-1-2 in PUCCH-Config |
| | Option 2. There is no dedicated field due to application of values determined based on predefined rule |
| | Option 3. Dedicated field exists, but K1 value is indicated differently from existing method |
| C-DAI, T-DAI | None |
| PRI | The PUCCH resource is designated by predefined rule, and thus, field is not present |

### (2) Case 2-2

In Case 2-2, the HARQ-ACK for the DCI for SCI is not combined with other HARQ-ACKs through codebook combining, but codebook combining may be applied to HARQ-ACKs for the DCI for SCI.

Specifically, the HARQ-ACK for the DCI for SCI (or the HARQ-ACK for the PDCCH carrying SCI) has a variable payload, so the HARQ-ACK may not be combined with other HARQ-ACKs. In this case, since a specific PUCCH resource for the HARQ-ACK for the DCI for SCI is designated based on a prior agreement, the DCI for SCI may not need to indicate the PUCCH resource through the PRI. That is, since the PUCCH resource is designated by a predefined rule, the NCR may always assume that a specific PRI is indicated for the HARQ-ACK for the DCI for SCI (or the HARQ-ACK for the PDCCH carrying SCI), even if the PRI is not explicitly indicated. For example, even if the PRI field is not present in the DCI for SCI, the NCR may always assume that the PRI for the HARQ-ACK for the DCI for SCI (or the HARQ-ACK for the PDCCH carrying SCI) is 1. Additionally, regarding implicit PUCCH resource selection based on a CCE index (i.e., the CCE index for the PDCCH carrying SCI), the NCR may determine that the specific PUCCH resource, pre-configured via RRC, is selected for the DCI for SCI without considering the CCE index, or the NCR may determine that the indication of the PUCCH resource based on the CCE index is valid. That is, the NCR may determine the PRI for the DCI for SCI based on the predefined rule, or the NCR may select the PUCCH resource based on the CCE index of the DCI.

Alternatively, since the payload of the DCI for SCI is variable, the existing method of indicating the PUCCH resource through the PRI for the DCI for SCI may be reused. Additionally, in contrast to Case 2-1, since the DCI for SCI has a variable payload, it is not necessary for both the C-DAI and T-DAI to be included in the DCI for SCI. In this case, the DCI for SCI may include either the C-DAI or T-DAI only. However, similar to the existing HARQ-ACK operation, both {C-DAI, T-DAI} may also be indicated. Additionally, in contrast to Case 2-1, since codebook combining is possible between the HARQ-ACKs for the PDCCH carrying SCI, it may be necessary for the K1 value to be indicated through the DCI for SCI. The SLIV of the PDSCH and K0 do not need to be configured/indicated through the DCI for SCI.

Alternatively, for scheduling flexibility, K0 may be determined/configured according to a predefined rule, similar to Case 1-2 of Scenario 1, or K0 may be indicated based on a dedicated field in the DCI for SCI. K1 may also be indicated, similarly to Case 1-2 of Scenario 1. That is, in Case 2-2 of Scenario 2, the DCI for SCI may define the existence of dedicated fields for each content and the method of indicating the contents as shown in Table 14. The options in each column of Table 14 may be applied independently.

**[Table 14]**

| **Contents** | **Existence of fields for contents in new DCI format for PDCCH carrying SCI and indication method** |
|---|---|
| SLIV of PDSCH, K0 | Option 1. There is no dedicated field due to application of values determined based on predefined rule |
| | Option 2. Dedicated field exists, but K0 value is indicated differently from existing method |
| K1 | Option 1. Dedicated field for indicating index of dl-DataToUL-ACK or dl-DataToUL-ACK-DCI-1-2 in PUCCH-Config |
| | Option 2. There is no dedicated field due to application of values determined based on predefined rule |
| | Option 3. Dedicated field exists, but K1 value is indicated differently from existing method |
| C-DAI, T-DAI | Option 1. Only C-DAI or T-DAI is indicated through dedicated field. |
| | Option 2. C-DAI or {T-DAI, C-DAI} is indicated in same way as indicated by dedicated field in existing fallback/non-fallback DCI |
| PRI | Option 1. PRI field is present |
| | Option 2. The PUCCH resource is designated by predefined rule, and thus, field is not present |

In summary, the NCR-MT may require the following information to transmit the HARQ-ACK for the PDCCH carrying SCI:
-> HARQ-ACK transmission slot
   - Method 1: The HARQ-ACK transmission slot may be configured/determined based on the K0 and K1 values. In this case, the NCR-MT may consider a slot after K0+K1 slots from a slot in which the PDCCH carrying SCI is transmitted as the slot for transmitting the HARQ-ACK.
      -- Regarding Method 1, the DCI for SCI may independently indicate the K0 and K1 values. In this case, the K0 value may be indicated through a TDRA index. To achieve this, the DCI carrying SCI may include a TDRA field. Alternatively, the DCI may include a dedicated field that independently indicates the K0 value. In this case, the K1 value may be indicated through a PDSCH-to-HARQ_feedback timing indicator field included in the DCI for SCI. Alternatively, the K0 value may be configured through RRC, and the K1 value may be indicated through the DCI for SCI. In this case, the K1 value may be indicated through the PDSCH-to-HARQ_feedback timing indicator field included in the DCI for SCI. Alternatively, the K0 value may be fixed to a specific value, and the K1 value may be indicated through the DCI for SCI. A specific value for K0 may correspond to the K0 value corresponding to a specific TDRA index. For example, the specific value for K0 may be determined based on the value of the specific TDRA index configured through RRC, or the specific value for K0 may always be determined based on a predefined value (e.g., 0, lowest index, highest index). In this case, the K1 value may be indicated through the PDSCH-to-HARQ_feedback timing indicator field included in the DCI for SCI.
   - Method 2: The HARQ-ACK transmission slot may be determined/set based on the K1 value. In this case, the NCR-MT may consider a slot after K1 slots from a slot in which the PDCCH carrying SCI is transmitted as the slot for transmitting the HARQ-ACK. To achieve this, the K1 value may be indicated through the PDSCH-to-HARQ_feedback timing indicator field in the DCI for SCI. Meanwhile, Method 2 may be similar to the Method 1 in that the K0 value is always considered as 0.
   - Method 3: The value of K1' may be directly indicated to determine the HARQ-ACK transmission slot. In this case, the NCR-MT may consider a slot after K1' slots from a slot in which the PDCCH carrying SCI is transmitted as the slot for transmitting the HARQ-ACK. In this case, the DCI for SCI may indicate the K1' value.
-> PUCCH resource
   - Method 1: The PUCCH resource for transmitting a HARQ-ACK may be determined based on the index value of the PUCCH resource indicated in the DCI for SCI. For example, the DCI may include a PRI field, and the index of the PUCCH resource may be indicated by a value included in the PRI field.
   - Method 2: In contrast to the method described in Method 1, in Method 2, the index of the PUCCH resource may not be indicated through the DCI. In this case, even if the PRI is not included in the DCI, the NCR may determine that a specific PRI value is indicated based on reception of the DCI. For example, if the UCI payload size is less than or equal to 2 (i.e., when the PUCCH resource is determined from resource set 0), it may be assumed that an implicit indication via a CCE index is valid. In this case, the NCR may determine the PUCCH resource based on the CCE index in the DCI.
   - Method 3: The NCR may determine that a specific PRI value is indicated based on reception of the DCI, even if the PRI is not indicated by the DCI. Additionally, regardless of the actual CCE index of the DCI used to indicate the SCI, the CCE index of the DCI for indicating the SCI may be considered as a specific value based on a prior agreement when determining the PUCCH resource information.
-> Type-1 HARQ-ACK codebook
   - When the Type-1 HARQ-ACK codebook is used, information about the position of bits for transmitting the HARQ-ACK information within the total number of bits constituting the HARQ-ACK information may be required. To achieve this, information on either or both of the SLIV and K1 may be required.
   - The K1 value, which determines the position of the bits for transmitting the HARQ-ACK information, may be determined based on one of the following methods.
      -- Method 1: The K1 value may be indicated through a PDSCH-to-HARQ_feedback timing indicator field included in the DCI for SCI.
      -- Method 2: K1 may be pre-configured through an RRC configuration.
      -- Method 3: The K1 value may always be determined as a specific value. For example, the K1 value may be determined as a value corresponding to the PDSCH-to-HARQ_feedback timing indicator when the value thereof is a specific value (e.g., 0).
   - The SLIV value, which determines the position of the bits for transmitting the HARQ-ACK information, may be determined based on one of the following methods.
      -- Method 1: The SLIV information may be indicated through the DCI for SCI. For example, the SLIV value may be determined as a value corresponding/mapped to a row index included in a TDRA field of the DCI.
      -- Method 2: The SLIV may be indicated/configured through an RRC configuration. To this end, the SLIV value may be directly configured. For example, the RRC configuration may indicate the row index of TDRA, and the SLIV may be determined as a value mapped to the row index of the TDRA indicated by the RRC configuration.
      -- Method 3: The row index value of a TDRA table for determining the SLIV may be fixed to a specific value. For example, the SLIV may be determined as a specific value corresponding/mapped to the lowest or highest row index (TDRA index 0) in the TDRA table.
      -- Method 4: The SLIV may be determined as the value of the SLIV with the earliest starting symbol among SLIV values corresponding to the TDRA table (among the SLIV values configured through PDSCH-TimeDomainResourceAllocationList).
   - The following methods may be considered to determine the position of the bits for transmitting the HARQ-ACK information.
      -- Method 1: The NCR-MT may always transmit HARQ-ACK information for the PDCCH carrying SCI in the first bit of the bits constituting the HARQ-ACK information.
      -- Method 2: The NCR-MT may always transmit HARQ-ACK information for the PDCCH carrying SCI in the last bit of the bits constituting the HARQ-ACK information.
      -- Method 3: The NCR-MT may always transmit HARQ-ACK information for the PDCCH carrying SCI in a specific B-th bit of the bits constituting the HARQ-ACK information. In this case, the value corresponding to B may be indicated by the K1 value of the DCI for SCI, or the value may be indicated/configured through an RRC configuration.
   - Alternatively, the NCR-MT may determine that HARQ-ACK information for the PDCCH carrying SCI is transmitted alone (as a single bit) without combining with other HARQ-ACK information. That is, when the NCR-MT transmits the HARQ-ACK for the PDCCH carrying SCI, the entire HARQ-ACK information is composed of 1 bit, and the HARQ-ACK information for the PDCCH carrying SCI may be transmitted through the 1 bit. In this case, it may be assumed that HARQ-ACK fallback is always applied when the NCR-MT transmits the HARQ-ACK information for the PDCCH carrying SCI.
-> Type-2 HARQ-ACK codebook
   - When the Type-1 HARQ-ACK codebook is used, the NCR-MT may determine the number of bits constituting HARQ-ACK information and the position of bits for transmitting the HARQ-ACK information based on the full or partial information of the C-DAI and T-DAI. Specifically, the NCR-MT may determine the number of bits constituting the HARQ-ACK information and the positions of the bits for transmitting the HARQ-ACK information based on at least one of the following methods.
      -- Method 1: The C-DAI and T-DAI information may be indicated through a DAI field of the DCI for SCI.
      -- Method 2: The NCR-MT may obtain/determine only the T-DAI information from C-DAI and T-DAI fields in the DAI field of the DCI for SCI. The C-DAI value may be assumed to always be 0. This means that the HARQ-ACK information for the PDCCH carrying SCI is always transmitted with the first bit among the bits constituting the HARQ-ACK information.
      -- Method 3: The NCR-MT may assume that both the T-DAI and C-DAI are 0. This means that the HARQ-ACK information for the PDCCH carrying SCI is transmitted alone (as a single bit) without combining with other HARQ-ACK information. That is, when the NCR-MT transmits the HARQ-ACK for the PDCCH carrying SCI, the entire HARQ-ACK information may be composed of 1 bit, and only the HARQ-ACK information for the PDCCH carrying SCI may be transmitted through the 1 bit.

To transmit the HARQ-ACK feedback in response to reception of the DCI for SCI, the NCR may determine the HARQ-ACK transmission slot based on the K0, K1, and/or SLIV information determined through the methods described above. The HARQ-ACK bits corresponding to the SCI reception may be determined within the HARQ-ACK payload. Based on the determined transmission slot and HARQ-ACK bits, the NCR may map/transfer the HARQ-ACK bits for SCI reception.

### Capability report of NCR for PDCCH to HARQ-ACK transmission

For the existing UE processing time, N1 and N2 are indicated at symbol granularity. N1 refers to the number of OFDM symbols required for UE processing from the end of PDSCH reception to the earliest possible start of the corresponding HARQ-ACK transmission from the UE perspective. N2 refers to the number of OFDM symbols required for UE processing from the end of PDCCH reception containing the UL grant to the earliest possible start of the corresponding PUSCH transmission from the UE perspective. Since there is no capability report to indicate the PDCCH to HARQ-ACK timing, the NCR may consider transmitting information about the time interval between the end of PDCCH reception and the start of the corresponding HARQ-ACK transmission from the perspective of the NCR to the gNB through a specific capability report (for example, a processing capability report). The capability report may be directly reported at the symbol/slot level through UCI/MAC-CE/RRC, or it may be reported as one of the pre-agreed candidates. The gNB needs to consider such a capability report when indicating the transmission timing of the PDCCH carrying SCI and HARQ-ACK. In contrast, if the transmission timing of the PDCCH carrying SCI and HARQ-ACK is indicated with a time interval shorter than the reported capability, the NCR may not transmit the HARQ-ACK for the PDCCH carrying SCI, even if the NCR successfully receives the PDCCH carrying SCI, without applying the SCI.

The proposed methods according to Scenario 1 and Scenario 2 may be summarized as follows.

### 1. HARQ-ACK for PDCCH carrying SCI

During the discussion of specific scenarios, the following agreement was reached regarding HARQ-ACK feedback for SCI (see Table 15). It was decided to support HARQ-ACK feedback for a PDSCH carrying SCI. The support for the HARQ-ACK feedback for the PDCCH carrying SCI was discussed, but it remains as an open issue (FFS) for further discussion.

**[Table 15]**

| |
|---|
| HARQ-ACK feedback for PDSCH carrying the side control information from higher layer (e.g., MAC-CE, RRC) is supported. The legacy HARQ-ACK feedback mechanism is reused. |
| - FFS: Whether HARQ-ACK feedback for PDCCH carrying side control information is supported Note: This does not mean all legacy HARQ-ACK feedback mechanism will be supported. |

In this section, the advantages and disadvantages of the HARQ-ACK for the PDCCH, parameters required for the HARQ-ACK transmission, and operations required to support the HARQ-ACK will be described.

To determine whether to support the HARQ-ACK for the PDCCH carrying SCI, it is necessary to consider the advantages and disadvantages of transmission. As described above, SCI may include all or part of the (NCR-Fwd) ON/OFF information and beam indication for access and backhaul links. Since this is critical information that directly impacts the performance of the NCR, it is necessary to explicitly report whether the reception is successful or not. Through the reporting, there may be an advantage in resolving ambiguity regarding the transmission and reception of SCI between the NCR and gNB. However, if the NCR transmits the HARQ-ACK for the PDCCH carrying SCI, the SCI needs to be applied after the HARQ-ACK is transmitted over the PUCCH. To expect specific operations from the NCR, the gNB needs to indicate (via the SCI) the operations to the NCR in advance, which may introduce the disadvantage of causing latency. Considering that the NCR does not have uplink simultaneous transmission capability for the backhaul link and C-link, the PUCCH transmission of the C-link and transmission on the backhaul link may be time-division multiplexed (TDMed). In this case, if more transmission opportunities are given to the C-link for transmitting the HARQ-ACK for the PDCCH carrying SCI, it may delay the uplink transmission on the backhaul link. On the other hand, if the uplink transmission on the backhaul link is prioritized for UEs served from the NCR, the delay issue in transmitting the HARQ-ACK for the PDCCH carrying SCI may become more serious. Additionally, when the HARQ-ACK for the PDCCH is supported, if the UE fails to receive the corresponding DCI, it is to mitigate potential inconsistencies in understanding between the gNB and UE regarding the HARQ-ACK codebook configuration, which may arise later. However, even if the DCI carrying the SCI from the NCR is not received, there may be no ambiguity regarding the HARQ-ACK codebook subsequently transmitted by the NCR. Nevertheless, if there is misunderstanding between the NCR and gNB regarding the reception and application of the ON/OFF indication and beam indication information of the NCR, link reliability issues may arise from the perspective of UEs served by the NCR. Furthermore, from the perspective of the gNB, there may be issues with the reliability of measurements from UEs served by the NCR.
- Observation 0: The HARQ-ACK for the PDCCH carrying SCI may assist in resolving the ambiguity between the NCR and gNB regarding the transmission and reception of the SCI, but it may increase latency. The latency issue may become more severe when considering that the NCR does not have the capability for simultaneous uplink transmission of the C-link and backhaul link.

Whether the HARQ-ACK for the PDCCH carrying SCI is introduced needs to be determined by considering not only the advantages and disadvantages mentioned above but also the characteristics of the existing HARQ-ACK for the PDCCH. Existing UEs support HARQ-ACK feedback operations for the PDCCH. For example, the DCI for SPS PDSCH release, the DCI for TCI state update, and the indication for SCell dormancy may be transmitted through DL grants (e.g., DCI format 1_0, 1_1, 1_2). In this case, the UE may transmit the HARQ-ACK for the PDCCH. In all cases, the existing HARQ-ACK transmission mechanism for the PDSCH may be reused to transmit the HARQ-ACK for the PDCCH. In other words, the method for transmitting the HARQ-ACK for a PDSCH based on a DL grant may be reused to specify and indicate parameters for the HARQ-ACK transmission. To achieve this, even if an actual PDSCH is not scheduled through DCI, the DCI indicates information about PDSCH transmission resources. Thus, the HARQ-ACK for the PDSCH may be transmitted on the resources designated for the HARQ-ACK for the PDCCH instead. Therefore, to support the HARQ-ACK for the PDCCH carrying SCI by reusing the existing mechanism, the SCI needs to be transmitted using the existing DL grant, or the DCI for carrying the SCI needs to include necessary fields for the HARQ-ACK transmission.

To transmit the HARQ-ACK for the PDCCH carrying SCI, the following determinations may be needed regarding the HARQ-ACK feedback timing, PUCCH resource, and HARQ-ACK codebook.
- To determine the timing for transmitting the HARQ-ACK, two parameters, K0 and K1, are needed. K0 and K1 may represent a DL grant PDCCH to corresponding PDSCH transmission and a PDSCH to the slot with the corresponding HARQ-ACK transmission at slot granularity. The K0 value is indicated with 4 bits through the TDRA field of the DCI (which is 4 bits). The TDRA field may indicate a specific row index from the TDRA table configured by PDSCH-TimeDomainResourceAllocationList configured via RRC. The K1 value is indicated through the PDSCH-to-HARQ feedback timing indicator field of the DCI, which is composed of a maximum of 3 bits. The PDSCH-to-HARQ feedback timing indicator field may indicate the index of dl-DataToUL-ACK or dl-DataToUL-ACKForDCIFormat1_2 configured via RRC. In other words, both the K0 and K1 values may indicate specific values of the IE configured by RRC via the DCI. Thus, when the current configuration is reused as it is, a total of at least 5 bits and a maximum of 7 bits of DCI fields may be required to determine the two values.
- A PUCCH resource may be indicated based on a PRI (or a combination of a CCE index and a UCI payload size) from a PUCCH resource set preconfigured via RRC. Therefore, a 3-bit PRI field may be required to determine the PUCCH resource.
- HARQ-ACK codebooks include a semi-static (type-1) HARQ-ACK codebook and a dynamic (type-2) HARQ-ACK codebook. The type of codebook to be used may be configured through RRC. To determine the position of bits for transmitting the HARQ-ACK using the semi-static codebook, information on a PDSCH-to-HARQ-ACK timing (i.e., K1) and SLIV may be required. To this end, a 4-bit TDRA field and a maximum of 3-bit PDSCH-to-HARQ feedback timing indicator field may be necessary. On the other hand, the characteristic of the type-2 codebook is that it may support an ACK/NACK report for a scheduled PDSCH. Therefore, the number of bits to send in an ACK/NACK report may be variable. In this case, ambiguity regarding the number of bits in the HARQ ACK/NACK report between the UE and gNB may arise. To prevent the ambiguity, a C-DAI and T-DAI may be indicated through a dedicated bit field of up to 4 bits in DCI. In other words, to transmit the HARQ-ACK using the dynamic the HARQ-ACK codebook, DAI information may be required.

As described above, if the transmission of the HARQ-ACK for the DCI carrying the SCI of the NCR is supported (to inherit the existing HARQ-ACK structure), DCI fields for indicating K0, K1, the SLIV, the PRI, the C-DAI, and the T-DAI may be required. This may lead to an increase in DCI overhead. Furthermore, since the existing DCI format is used not only for transmission of the HARQ-ACK for the DCI format but also for DL grants (i.e., to schedule a PDSCH), the aforementioned fields may be necessary. However, since the DCI format for SCI does not support the DL grant, some of the fields mentioned above may be unnecessary. Therefore, to reduce the DCI overhead in the DCI format for SCI, only dedicated bit fields for minimum required information for the HARQ-ACK transmission need to be included in the DCI format. In this case, it may be necessary to discuss which specific information required for the HARQ-ACK feedback for the DCI carrying SCI needs to be indicated by the DCI.
- Observation 1: To support the HARQ-ACK feedback for the PDCCH carrying SCI while reusing the existing mechanism, the following fields need to be included in the DCI for SCI.
   -- When the semi-static HARQ-ACK codebook is used, at least one of the following fields need to be included: the time domain resource assignment field, PDSCH-to-HARQ feedback timing indicator field, or PUCCH resource indicator field.
   -- When the dynamic HARQ-ACK codebook is used, the DAI field needs to be included.
- Proposal 0: A method of reducing DCI fields required for HARQ-ACK feedback for a PDCCH carrying SCI needs to be considered.

### 2. DCI design for SCI

Two types of DCI may be required for SCI. One type may be DCI carrying/including aperiodic SCI. The other type may be DCI for activating/deactivating the configuration of semi-persistent SCI.

### (1) DCI for SCI

According to the discussion results in the companion contribution, the fields required for transmitting aperiodic SCI are as follows.
- Beam/OFF indication field

Aperiodic SCI may support a beam indication and an OFF state indication. As proposed in the companion contribution, the beam indication and OFF state indication are not indicated separately, but the beam indication and OFF state indication may be indicated through a combination using the beam/OFF indication field. For example, as shown in Table 16, if the value of the field is '0', it may indicate the OFF state, and if it is another value, it may represent a specific beam index.

**[Table 16]**

| value | description |
|---|---|
| 0 | OFF |
| 1 | Beam index 0 |
| 2 | Beam index 1 |
| ... | ... |
| N | Beam index N-1 |

- Time resource indication field

To indicate the time resource to which the beam/OFF indication is applied, the time resource indication field may be needed. By indicating the starting symbol position and symbol length with the field, the time resource, which consists of consecutive symbols, may be indicated.
- HARQ-ACK for DCI related fields

As mentioned above, fields may be required to support the HARQ-ACK feedback for the PDCCH carrying SCI. When the existing mechanism is reused as much as possible, at least one of the following fields should be included in the DCI.
-- Time domain resource assignment
-- PDSCH-to-HARQ_feedback timing indicator
-- PUCCH resource indicator
-- Downlink assignment index

Additionally, a method of reducing reduce fields required for DCI overhead reduction may be considered. In this case, the configuration of fields related to the HARQ-ACK for DCI may vary.

On the other hand, since the explicit ON indication is not required and the OFF indication may be combined with the beam indication, an explicit field for indicating ON and/or OFF may not be necessary. For a backhaul link beam indication, since a semi-static configuration is sufficient, there may be no need to define a separate DCI field.

Proposal 1: For DCI for SCI, following fields are necessary -> Beam/OFF indication field, Time resource indication field, HARQ-ACK for DCI related fields

On the other hand, to support the indication of beam and OFF states for multiple time resources, multiple beam/OFF indication fields and time resource indication fields may be required (in the DCI). In this case, each beam/OFF indication may correspond to a specific time resource indication. For example, there may be an equal number of beam/OFF indication fields and time resource indication fields. Beam/OFF indication 1 may be applied to a time resource indicated by time resource indication 1, and beam/OFF indication 2 may be applied to a time resource indicated by Time resource indication 2. In this case, the size of the DCI may vary depending on the number of fields. To monitor the DCI, the NCR-MT needs to know the DCI size. To achieve this, the DCI length or the number of beam/off indication or time resource indication fields may be configured via RRC.

Proposal 2: To determine the DCI size for SCI, the number of fields for beam/OFF indication may be configured.

When the DCI format carrying SCI is designed, whether DCI is NCR-MT-specific or NCR-MT-group-specific should be determined. Generally, a UE-group-specific DCI format may be appropriately used when the amount of information to be transmitted to one UE is not large and there is a need to transmit the DCI to multiple UEs simultaneously (or when there is a need to indicate the same information to multiple UEs). However, the SCI may need to include the beam/OFF indication, corresponding time resource, and HARQ-ACK related fields. In this case, the amount of content to be included in the DCI field may be relatively large. Additionally, since the SCI is NCR-MT-specific information, it is not expected that the same SCI will be transmitted to multiple NCR-MTs. In this regard, it may be more appropriate for the DCI carrying SCI to be based on an NCR-MT-specific DCI format rather than an NCR-MT-group specific DCI format.

Proposal 3: NCR-MT-specific DCI is supported to indicate aperiodic SCI.

It may not be appropriate to reuse the existing DCI format used for DL/UL data scheduling for the DCI for SCI. The SCI is not information for data scheduling. That is, the SCI is intended for a completely different purpose from the existing DL/UL grants. Additionally, the DL/UL grants include many redundant fields that are not necessary for transmitting the SCI. Therefore, a new DCI format needs to be introduced/defined for the SCI.

Proposal 4: A new DCI format is introduced for DCI for SCI.

### (2) DCI for activation/deactivation of semi-persistent SCI

The configuration of semi-persistent SCI may be performed by RRC. In this case, activation/deactivation may be indicated by the DCI on a per-configuration basis. To achieve this, the DCI needs to include the following information.
- Configuration index field: To perform activation/deactivation for the semi-persistent SCI on a per-configuration basis, the index of a configuration to which the activation/deactivation indication is applied may be indicated.
- Activation/Deactivation indication field: A field indicating whether the configuration index, indicated through the configuration index field, is activated or deactivated.
- HARQ-ACK for DCI related fields: For the stable forwarding operation of the NCR-Fwd, the NCR-Fwd needs to perform HARQ-ACK feedback for DCI reception such that the gNB determines whether the NCR-MT receives the DCI for activation/deactivation of the semi-persistent SCI. To achieve this, similar to the DCI for SCI, at least one of the following fields may be necessary.
   -- Time domain resource assignment
   -- PDSCH-to-HARQ_feedback timing indicator
   -- PUCCH resource indicator
   -- Downlink assignment index

On the other hand, if a method of reducing the number of fields required for DCI overhead reduction is considered, the configuration of fields related to HARQ-ACK for DCI may vary.

Proposal 5: For DCI for activation/deactivation of semi-persistent SCI, the following fields are necessary.
- Configuration index field
- Activation/Deactivation indication field
- HARQ-ACK for DCI related fields

For DCI for activation/deactivation of semi-persistent SCI, a separate DCI format may be created, or the same DCI format as the DCI for SCI may be used, with different interpretations of the fields for the activation/deactivation of the semi-persistent SCI.

To distinguish between the DCI for the activation/deactivation of the semi-persistent SCI and the DCI for SCI, the DCI for the activation/deactivation of the semi-persistent SCI may be scrambled with a different RNTI from that used for DCI for SCI.

Proposal 6: A discussion may be needed on whether to use the same DCI format as DCI for SCI or to create a separate DCI format for activation/deactivation of semi-persistent SCI.

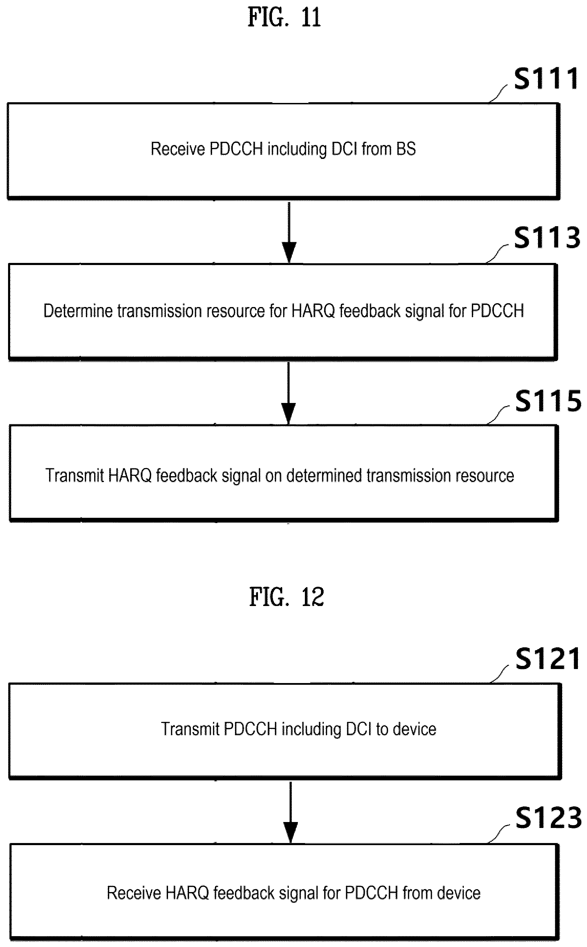

FIG. 11 is a diagram for explaining a method by which a device having a backhaul link and a control link formed with a BS performs communication.

The device may include an NCR-MT that forms a control link with the BS, and an NCR-fwd (NCR-RU) that forms a backhaul link with the BS while also forming a forwarding link with a UE. In other words, the device may be the aforementioned NCR device. The device may receive control information related to the NCR through the control link and transmit signals thereof to the BS. Additionally, the device may forward signals received from the UE via the forwarding link to the BS through the backhaul link or forward signals received from the BS through the backhaul link to the UE via the forwarding link.

Referring to FIG. 11, the device may receive a PDCCH including DCI (related to control of the backhaul link) via the control link (S111). In this case, the device may receive DCI that includes control information for at least one of the control link and backhaul link, and the control information for the backhaul link may be received via DCI including SCI.

Next, the device may determine a transmission resource for a HARQ feedback signal for the PDCCH (S113). Regarding the determination of the transmission resource, the device may decide the transmission resource differently based on whether the PDCCH includes DCI for the control link or DCI for the backhaul link. For example, if the PDCCH includes the DCI for the control link, the device may determine the transmission resource for the HARQ feedback signal based on values such as K0/K1 indicated in the DCI. Alternatively, as mentioned above, when the PDCCH includes the DCI including the SCI, which is the control information for the backhaul link, the device may determine the transmission resource for the HARQ feedback signal based on K0/K1 values determined according to a predefined rule, regardless of the values indicated for K0/K1 in the DCI.

Specifically, regarding the transmission of the HARQ feedback signal/HARQ information, the device may transmit the HARQ feedback signal including the HARQ information for the DCI/PDCCH at/on a HARQ transmission timing/transmission resources determined based on at least one of the following: K0, K1, SLIV, PRI, C-DAI, and T-DAI indicated in the DCI. As described above, K0 includes information about a slot interval between the PDCCH and a PDSCH scheduled by the PDCCH, and K1 includes information about an interval between the PDSCH and the HARQ feedback signal.

As mentioned above, when the DCI is used to transmit the SCI, which is the control information for the backhaul link (the existing DCI format or a new DCI format), the device may determine at least one of the K0 and K1 values (and/or SLIV, PRI, C-DAI, and T-DAI) based on the predefined rule, regardless of the DCI (even in cases where the HARQ-ACK codebook is configured to be determined based on the DCI, such as the Type-2 HARQ-ACK codebook). For example, the device may determine the K0/K1 values according to the predefined rule even if the DCI does not include a dedicated field indicating K0/K1 (or even if such dedicated fields for K0/K1 are included in the DCI). For example, as explained in Alternative 1-1, Alternative 1-2, Alternative 1-3, and/or Alternative 1-4 of Case 1-1 in Scenario 1, even if the HARQ-ACK codebook configuration and/or HARQ-ACK timing determination is configured based on the DCI (even if the dynamic (Type-2) HARQ-ACK codebook is configured), the device may determine the K0/K1 values for the transmission of the HARQ feedback signal for DCI/PDCCH including the SCI according to the predefined rule, regardless of the DCI. On the other hand, in Case 2-1 of Scenario 2 where the HARQ-ACK feedback signal is transmitted without combining with HARQ-ACK codebooks, the device may determine the transmission resource for the HARQ feedback signal without determining an SLIV.

As described in Alternative 1-1, Alternative 1-2, Alternative 1-3, and/or Alternative 1-4 of Scenario 1 (or Scenario 2), according to the predefined rule, K0 may always be determined as 0, or K0 may be determined as a value corresponding to the lowest or highest index in a TDRA table configured through RRC signaling. Alternatively, according to the predefined rule, K1 may be determined as the largest or smallest value among K1 values configured through RRC signaling from the BS. Alternatively, if the device reports capability information about the minimum processing time related to the HARQ feedback signal transmission to the BS, the device may determine K1 using the minimum processing time based on the predefined rule, regardless of the K1 indication in the DCI. Here, the minimum processing time may be based on the values of N1 and/or N2 (or a specific capability report for the NCR).

In other words, the DCI including the SCI may be a new DCI format that does not include fields for the following: K0, SLIV, K1, and PRI. Alternatively, even if the fields are included in the DCI, if the DCI contains the SCI, the device may determine the values for K0/K1 according to the predefined rule, regardless of the values included in the DCI or the values indicated by the DCI.

On the other hand, if the SCI is not included in the DCI, the device may determine the transmission resource for the HARQ feedback signal for DCI/PDCCH without the SCI, based on the K0/K1 values included in the DCI. For example, if the DCI contains the control information for the control link rather than the backhaul link, the device may determine the transmission resource for the HARQ feedback signal of the DCI/PDCCH based on the K0/K1 values indicated in the DCI, rather than the predefined rule. In other words, depending on whether the SCI is included in the DCI, the device may determine whether to use the values indicated in the DCI or the predefined rule to determine the value of K1/K0 for determining the transmission resource for the HARQ feedback signal.

Alternatively, the device may transmit the HARQ feedback signal containing HARQ feedback information obtained through codebook combining only for PDCCHs including the SCI, as in Case 2-2 of Scenario 2.

Alternatively, the device may determine only K0 based on the predefined rule, while determining K1 based on the value indicated by the field in the DCI carrying the SCI. For example, when the DCI indicates both K0 and K1, the device may disregard the value indicated for K0 and determine K0 based on the predefined rule, but the device may determine K1 based on the value indicated by the DCI (refer to Scenario 1). Alternatively, when the DCI indicates both K0 and K1, the device may disregard the value indicated for K1 and determine K1 based on the predefined rule, but the device may determine K0 based on the value indicated by the DCI.

Among fields/parameters related to the determination of the transmission resource for the HARQ feedback signal, fields/parameters that do not follow the predefined rule may apply the existing indication method as explained with reference to FIG. 7.

Next, the device may transmit the HARQ feedback signal for the PDCCH (through the backhaul link) on the determined transmission resource (S115).

FIG. 12 is a diagram for explaining a method by which a BS having a control link and a backhaul link formed with a device perform communication.

Referring to FIG. 12, the BS may transmit a PDCCH containing DCI related to control of the backhaul link of the device to the device via the control link (S121). Here, the DCI may include SCI as described above, which is used for controlling the backhaul link.

Next, the BS may receive a HARQ feedback signal for the PDCCH from the device via the backhaul link (S123). Regarding the transmission of the HARQ feedback signal/HARQ information as described above, the BS may indicate the following: K0, K1, SLIV, PRI, C-DAI, and T-DAI for determining a HARQ transmission timing/resource for the HARQ feedback signal through the DCI (for example, in the case of a dynamic type-2 HARQ-ACK).

As described above, if the DCI is DCI for carrying the SCI, which is control information for the backhaul link (the existing DCI format or a new DCI format), the BS may expect/predict that at least one of the K0 and K1 values (and/or SLIV, PRI, C-DAI, and T-DAI) will be determined based on a predefined rule, regardless of the DCI. Even if the BS transmits the DCI without including a dedicated field for indicating K0/K1, the BS may still expect/predict that the device will determine the values for K0/K1 based on the predefined rule. For example, as described in Alternative 1-1, Alternative 1-2, Alternative 1-3, and/or Alternative 1-4 of Scenario 1, even if the BS configures the device to determine the HARQ-ACK codebook configuration and/or HARQ-ACK timing based on the DCI (e.g., the dynamic (type-2) HARQ-ACK codebook configuration), when the BS transmits the DCI/PDCCH including the SCI, the BS may expect/predict that the HARQ feedback signal for the DCI/PDCCH will be transmitted by the device based on predefined K0/K1 values. In Case 2-1 of Scenario 2 where the HARQ-ACK feedback signal is transmitted without combining with HARQ-ACK codebooks, the BS may transmit DCI to the device without including the SLIV field (i.e., DCI without K0/K1/SLIV).

As described in Alternative 1-1, Alternative 1-2, Alternative 1-3, and/or Alternative 1-4 of Scenario 1 (or Scenario 2), according to the predefined rule, K0 may always be determined as 0, or K0 may be determined as a value corresponding to the lowest or highest index in a TDRA table configured through RRC signaling. Alternatively, according to the predefined rule, K1 may be determined as the highest or lowest value among K1 values configured through RRC signaling from the BS. Alternatively, if the device reports capability information about the minimum processing time related to the HARQ feedback signal transmission to the BS, the device may determine K1 using the minimum processing time based on the predefined rule, regardless of the indication of K1 in the DCI. Here, the minimum processing time may be based on the values of N1 and/or N2 (or a specific capability report for the NCR).

Alternatively, the BS may receive the HARQ feedback signal containing HARQ feedback information obtained through codebook combining only for PDCCHs carrying the SCI, as in Case 2-2 of Scenario 2.

In this way, by predefining values related to the timing of HARQ feedback for DCI carrying SCI, it is possible to minimize the overhead of the DCI by excluding at least one of the fields related to the HARQ feedback for the DCI carrying SCI. Additionally, among the fields of the DCI required for determining the transmission timing/resource of the HARQ feedback signal, unnecessary fields (such as K0/K1) may be determined according to a predefined rule, based on the characteristics of the DCI carrying SCI (considering that the fields are not for PDSCH scheduling). For the remaining fields, the existing indication methods may be maintained/reused, thereby minimizing changes to the existing DCI framework.

### Communication system example to which the present disclosure is applied

Although not limited thereto, various descriptions, functions, procedures, proposals, methods, and/or operational flow charts of the present disclosure disclosed in this document may be applied to various fields requiring wireless communication/connection (5G) between devices.

Hereinafter, it will be illustrated in more detail with reference to the drawings. In the following drawings/description, the same reference numerals may exemplify the same or corresponding hardware blocks, software blocks, or functional blocks, unless otherwise indicated.

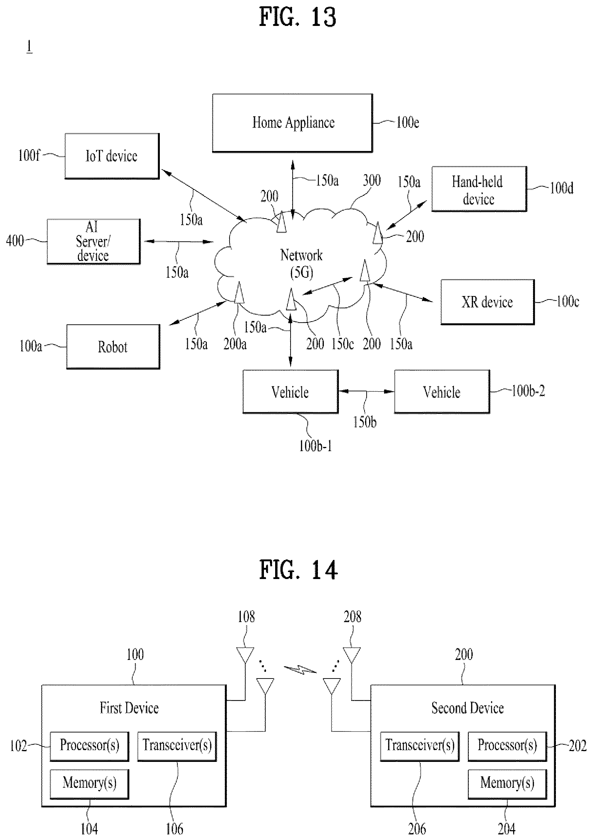

FIG. 13 illustrates a communication system applied to the present disclosure.

Referring to FIG. 13, a communication system 1 applied to the present disclosure includes wireless devices, Base Stations (BSs), and a network. Herein, the wireless devices represent devices performing communication using Radio Access Technology (RAT) (e.g., 5G New RAT (NR)) or Long-Term Evolution (LTE)) and may be referred to as communication/radio/SG devices. The wireless devices may include, without being limited to, a robot 100a, vehicles 100b-1 and 100b-2, an eXtended Reality (XR) device 100c, a hand-held device 100d, a home appliance 100e, an Internet of Things (IoT) device 100f, and an Artificial Intelligence (AI) device/server 400. For example, the vehicles may include a vehicle having a wireless communication function, an autonomous driving vehicle, and a vehicle capable of performing communication between vehicles. Herein, the vehicles may include an Unmanned Aerial Vehicle (UAV) (e.g., a drone). The XR device may include an Augmented Reality (AR)/Virtual Reality (VR)/Mixed Reality (MR) device and may be implemented in the form of a Head-Mounted Device (HMD), a Head-Up Display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter. For example, the BSs and the network may be implemented as wireless devices and a specific wireless device 200a may operate as a BS/network node with respect to other wireless devices.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without passing through the BSs/network. For example, the vehicles 100b-1 and 100b-2 may perform direct communication (e.g., Vehicle-to-Vehicle (V2V)/Vehicle-to-everything (V2X) communication). The IoT device (e.g., a sensor) may perform direct communication with other IoT devices (e.g., sensors) or other wireless devices 100a to 100f.

Wireless communication/connections 150a, 150b, or 150c may be established between the wireless devices 100a to 100f/BS 200, or BS 200/BS 200. Herein, the wireless communication/connections may be established through various RATs (e.g., 5G NR) such as uplink/downlink communication 150a, sidelink communication 150b (or, D2D communication), or inter BS communication (e.g., relay, Integrated Access Backhaul(IAB)). The wireless devices and the BSs/the wireless devices may transmit/receive radio signals to/from each other through the wireless communication/connections 150a and 150b. For example, the wireless communication/connections 150a and 150b may transmit/receive signals through various physical channels. To this end, at least a part of various configuration information configuring processes, various signal processing processes (e.g., channel encoding/decoding, modulation/demodulation, and resource mapping/demapping), and resource allocating processes, for transmitting/receiving radio signals, may be performed based on the various proposals of the present disclosure.

### Examples of wireless devices to which the present disclosure is applied

FIG. 14 illustrates a wireless device applicable to the present disclosure.

Referring to FIG. 14, a first wireless device 100 and a second wireless device 200 may transmit radio signals through a variety of RATs (e.g., LTE and NR). Herein, {the first wireless device 100 and the second wireless device 200} may correspond to {the wireless device 100x and the BS 200} and/or {the wireless device 100x and the wireless device 100x} of FIG. 13.

The first wireless device 100 may include one or more processors 102 and one or more memories 104 and additionally further include one or more transceivers 106 and/or one or more antennas 108. The processor(s) 102 may control the memory(s) 104 and/or the transceiver(s) 106 and may be configured to implement the descriptions, functions, procedures, proposals, methods, and/or operational flowcharts disclosed in this document. For example, the processor(s) 102 may process information within the memory(s) 104 to generate first information/signals and then transmit radio signals including the first information/signals through the transceiver(s) 106. The processor(s) 102 may receive radio signals including second information/signals through the transceiver 106 and then store information acquired by processing the second information/signals in the memory(s) 104. The memory(s) 104 may be connected to the processor(s) 102 and may store a variety of information related to operations of the processor(s) 102. For example, the memory(s) 104 may store software code including commands for performing a part or the entirety of processes controlled by the processor(s) 102 or for performing the descriptions, functions, procedures, proposals, methods, and/or operational flowcharts disclosed in this document. Herein, the processor(s) 102 and the memory(s) 104 may be a part of a communication modem/circuit/chip designed to implement RAT (e.g., LTE or NR). The transceiver(s) 106 may be connected to the processor(s) 102 and transmit and/or receive radio signals through one or more antennas 108. Each of the transceiver(s) 106 may include a transmitter and/or a receiver. The transceiver(s) 106 may be interchangeably used with Radio Frequency (RF) unit(s). In the present disclosure, the wireless device may represent a communication modem/circuit/chip.

For example, the first wireless device 100 or a device may include the processor(s) 102 connected to the RF transceiver(s) 106 and the memory(s) 104. The memory(s) 104 may include at least one program capable of performing operations related to the embodiments described in FIGS. 9 to 12.

Specifically, the processor(s) 102 may control the RF transceiver(s) 106 to receive a PDCCH including DCI from a BS through a control link; and transmit a HARQ feedback signal for the PDCCH through a backhaul link. In this case, a transmission resource for the HARQ feedback signal may be determined based on K0 and K1, where K0 represents a slot interval between the PDCCH and a PDSCH and K1 represents an interval between the PDSCH and the HARQ feedback signal. Based on that SCI is included in the DCI, at least one of K0 and K1 may be determined based on a predefined rule.

Alternatively, there is provided a processing device configured to control a device having a control link and a backhaul link formed with a BS having the processor(s) 102 and the memory(s) 104. In this case, the processing device includes at least one processor; and at least one memory connected to the at least one processor and storing instructions that, based on execution by the at least one processor, cause a UE to: receive a PDCCH including DCI from a BS through the control link; and transmit a HARQ feedback signal for the PDCCH through the backhaul link. In this case, a transmission resource for the HARQ feedback signal may be determined based on K0 and K1, where K0 represents a slot interval between the PDCCH and a PDSCH and K1 represents an interval between the PDSCH and the HARQ feedback signal. Based on that SCI is included in the DCI, at least one of K0 and K1 may be determined based on a predefined rule.

Alternatively, a non-transitory computer-readable storage medium having recorded thereon instructions for executing the proposed methods described with reference to FIGS. 9 to 12 may be configured.

The second wireless device 200 may include one or more processors 202 and one or more memories 204 and additionally further include one or more transceivers 206 and/or one or more antennas 208. The processor(s) 202 may control the memory(s) 204 and/or the transceiver(s) 206 and may be configured to implement the descriptions, functions, procedures, proposals, methods, and/or operational flowcharts disclosed in this document. For example, the processor(s) 202 may process information within the memory(s) 204 to generate third information/signals and then transmit radio signals including the third information/signals through the transceiver(s) 206. The processor(s) 202 may receive radio signals including fourth information/signals through the transceiver(s) 106 and then store information acquired by processing the fourth information/signals in the memory(s) 204. The memory(s) 204 may be connected to the processor(s) 202 and may store a variety of information related to operations of the processor(s) 202. For example, the memory(s) 204 may store software code including commands for performing a part or the entirety of processes controlled by the processor(s) 202 or for performing the descriptions, functions, procedures, proposals, methods, and/or operational flowcharts disclosed in this document. Herein, the processor(s) 202 and the memory(s) 204 may be a part of a communication modem/circuit/chip designed to implement RAT (e.g., LTE or NR). The transceiver(s) 206 may be connected to the processor(s) 202 and transmit and/or receive radio signals through one or more antennas 208. Each of the transceiver(s) 206 may include a transmitter and/or a receiver. The transceiver(s) 206 may be interchangeably used with RF unit(s). In the present disclosure, the wireless device may represent a communication modem/circuit/chip.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as PHY, MAC, RLC, PDCP, RRC, and SDAP). The one or more processors 102 and 202 may generate one or more Protocol Data Units (PDUs) and/or one or more Service Data Unit (SDUs) according to the descriptions, functions, procedures, proposals, methods, and/or operational flowcharts disclosed in this document. The one or more processors 102 and 202 may generate messages, control information, data, or information according to the descriptions, functions, procedures, proposals, methods, and/or operational flowcharts disclosed in this document. The one or more processors 102 and 202 may generate signals (e.g., baseband signals) including PDUs, SDUs, messages, control information, data, or information according to the descriptions, functions, procedures, proposals, methods, and/or operational flowcharts disclosed in this document and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, proposals, methods, and/or operational flowcharts disclosed in this document.

The one or more processors 102 and 202 may be referred to as controllers, microcontrollers, microprocessors, or microcomputers. The one or more processors 102 and 202 may be implemented by hardware, firmware, software, or a combination thereof. As an example, one or more Application Specific Integrated Circuits (ASICs), one or more Digital Signal Processors (DSPs), one or more Digital Signal Processing Devices (DSPDs), one or more Programmable Logic Devices (PLDs), or one or more Field Programmable Gate Arrays (FPGAs) may be included in the one or more processors 102 and 202. The descriptions, functions, procedures, proposals, methods, and/or operational flowcharts disclosed in this document may be implemented using firmware or software and the firmware or software may be configured to include the modules, procedures, or functions. Firmware or software configured to perform the descriptions, functions, procedures, proposals, methods, and/or operational flowcharts disclosed in this document may be included in the one or more processors 102 and 202 or stored in the one or more memories 104 and 204 so as to be driven by the one or more processors 102 and 202. The descriptions, functions, procedures, proposals, methods, and/or operational flowcharts disclosed in this document may be implemented using firmware or software in the form of code, commands, and/or a set of commands.

The one or more memories 104 and 204 may be connected to the one or more processors 102 and 202 and store various types of data, signals, messages, information, programs, code, instructions, and/or commands. The one or more memories 104 and 204 may be configured by Read-Only Memories (ROMs), Random Access Memories (RAMs), Electrically Erasable Programmable Read-Only Memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the methods and/or operational flowcharts of this document, to one or more other devices. The one or more transceivers 106 and 206 may receive user data, control information, and/or radio signals/channels, mentioned in the descriptions, functions, procedures, proposals, methods, and/or operational flowcharts disclosed in this document, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices. The one or more transceivers 106 and 206 may be connected to the one or more antennas 108 and 208 and the one or more transceivers 106 and 206 may be configured to transmit and receive user data, control information, and/or radio signals/channels, mentioned in the descriptions, functions, procedures, proposals, methods, and/or operational flowcharts disclosed in this document, through the one or more antennas 108 and 208. In this document, the one or more antennas may be a plurality of physical antennas or a plurality of logical antennas (e.g., antenna ports). The one or more transceivers 106 and 206 may convert received radio signals/channels etc. from RF band signals into baseband signals in order to process received user data, control information, radio signals/channels, etc. using the one or more processors 102 and 202. The one or more transceivers 106 and 206 may convert the user data, control information, radio signals/channels, etc. processed using the one or more processors 102 and 202 from the base band signals into the RF band signals. To this end, the one or more transceivers 106 and 206 may include (analog) oscillators and/or filters.

### Examples of application of wireless devices to which the present disclosure is applied

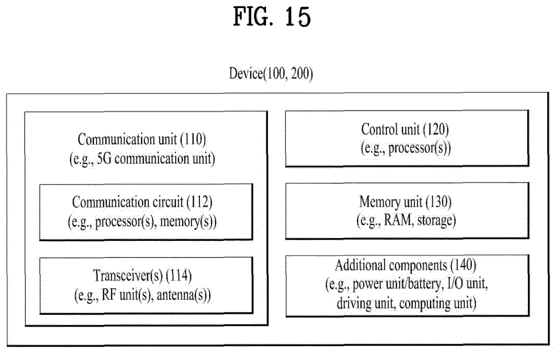

FIG. 15 illustrates another example of a wireless device applied to the present disclosure.

Referring to FIG. 15, wireless devices 100 and 200 may correspond to the wireless devices 100 and 200 of FIG. 14 and may be configured by various elements, components, units/portions, and/or modules. For example, each of the wireless devices 100 and 200 may include a communication unit 110, a control unit 120, a memory unit 130, and additional components 140. The communication unit may include a communication circuit 112 and transceiver(s) 114. For example, the communication circuit 112 may include the one or more processors 102 and 202 and/or the one or more memories 104 and 204 of FIG. 14. For example, the transceiver(s) 114 may include the one or more transceivers 106 and 206 and/or the one or more antennas 108 and 208 of FIG. 14. The control unit 120 is electrically connected to the communication unit 110, the memory 130, and the additional components 140 and controls overall operation of the wireless devices. For example, the control unit 120 may control an electric/mechanical operation of the wireless device based on programs/code/commands/information stored in the memory unit 130. The control unit 120 may transmit the information stored in the memory unit 130 to the exterior (e.g., other communication devices) via the communication unit 110 through a wireless/wired interface or store, in the memory unit 130, information received through the wireless/wired interface from the exterior (e.g., other communication devices) via the communication unit 110.

The additional components 140 may be variously configured according to types of wireless devices. For example, the additional components 140 may include at least one of a power unit/battery, input/output (I/O) unit, a driving unit, and a computing unit. The wireless device may be implemented in the form of, without being limited to, the robot (100a of FIG. 13), the vehicles (100b-1 and 100b-2 of FIG. 13), the XR device (100c of FIG. 13), the hand-held device (100d of FIG. 13), the home appliance (100e of FIG. 13), the IoT device (100f of FIG. 13), a digital broadcast terminal, a hologram device, a public safety device, an MTC device, a medicine device, a fintech device (or a finance device), a security device, a climate/environment device, the AI server/device (400 of FIG. 13), the BSs (200 of FIG. 13), a network node, etc. The wireless device may be used in a mobile or fixed place according to a use-example/service.

In FIG. 15, the entirety of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. Each element, component, unit/portion, and/or module within the wireless devices 100 and 200 may further include one or more elements. For example, the control unit 120 may be configured by a set of one or more processors. As an example, the control unit 120 may be configured by a set of a communication control processor, an application processor, an Electronic Control Unit (ECU), a graphical processing unit, and a memory control processor. In another example, the memory 130 may be configured by a Random Access Memory (RAM), a Dynamic RAM (DRAM), a Read Only Memory (ROM)), a flash memory, a volatile memory, a non-volatile memory, and/or a combination thereof.

Here, wireless communication technologies implemented in the wireless devices (XXX, YYY) of the present specification may include LTE, NR, and 6G, as well as Narrowband Internet of Things for low power communication. At this time, for example, the NB-IoT technology may be an example of a Low Power Wide Area Network (LPWAN) technology, and may be implemented in standards such as LTE Cat NB1 and/or LTE Cat NB2, and is not limited to the above-described names. Additionally or alternatively, the wireless communication technology implemented in the wireless devices (XXX, YYY) of the present specification may perform communication based on LTE-M technology. In this case, as an example, the LTE-M technology may be an example of LPWAN technology, and may be referred to by various names such as eMTC (enhanced machine type communication). For example, LTE-M technology may be implemented in at least one of a variety of standards, such as 1) LTE CAT 0, 2) LTE Cat M1, 3) LTE Cat M2, 4) LTE non-BL (non-Bandwidth Limited), 5) LTE-MTC, 6) LTE Machine Type Communication, and/or 7) LTE M, and is not limited to the above-described names. Additionally or alternatively, the wireless communication technology implemented in the wireless devices (XXX, YYY) of the present specification is at least one of ZigBee, Bluetooth, and Low Power Wide Area Network (LPWAN) considering low power communication, and is not limited to the above-described names. As an example, ZigBee technology may generate personal area networks (PANs) related to small/low-power digital communication based on various standards such as IEEE 802.15.4, and may be called various names.

The embodiments described above are those in which components and features of the present disclosure are combined in a predetermined form. Each component or feature should be considered optional unless explicitly stated otherwise. Each component or feature may be implemented in a form that is not combined with other components or features. In addition, it is also possible to constitute an embodiment of the present disclosure by combining some components and/or features. The order of operations described in the embodiments of the present disclosure may be changed. Some configurations or features of one embodiment may be included in other embodiments, or may be replaced with corresponding configurations or features of other embodiments. It is obvious that the embodiments may be configured by combining claims that do not have an explicit citation relationship in the claims or may be included as new claims by amendment after filing.

In this document, embodiments of the present disclosure have been mainly described based on a signal transmission/reception relationship between a terminal and a base station. Such a transmission/reception relationship is extended in the same/similar manner to signal transmission/reception between a terminal and a relay or a base station and a relay. A specific operation described as being performed by a base station in this document may be performed by its upper node in some cases. That is, it is obvious that various operations performed for communication with a terminal in a network comprising a plurality of network nodes including a base station may be performed by the base station or network nodes other than the base station. The base station may be replaced by terms such as a fixed station, a Node B, an eNode B (eNB), an access point, and the like. In addition, the terminal may be replaced with terms such as User Equipment (UE), Mobile Station (MS), Mobile Subscriber Station (MSS).

In a hardware configuration, the embodiments of the present disclosure may be achieved by one or more application specific integrated circuits (ASICs), digital signal processors (DSPs), digital signal processing devices (DSPDs), programmable logic devices (PLDs), field programmable gate arrays (FPGAs), processors, controllers, microcontrollers, microprocessors, etc.

In a firmware or software configuration, a method according to embodiments of the present disclosure may be implemented in the form of a module, a procedure, a function, etc. Software code may be stored in a memory unit and executed by a processor. The memory unit is located at the interior or exterior of the processor and may transmit and receive data to and from the processor via various known means

As described before, a detailed description has been given of preferred embodiments of the present disclosure so that those skilled in the art may implement and perform the present disclosure. While reference has been made above to the preferred embodiments of the present disclosure, those skilled in the art will understand that various modifications and alterations may be made to the present disclosure within the scope of the present disclosure.

### INDUSTRIAL APPLICABILITY

The above-described embodiments of the present disclosure may be applied to various mobile communication systems.

## Claims

1. A method of performing communication by a device having a control link and a backhaul link formed with a base station (BS) in a wireless communication system, the method comprising:
receiving a physical downlink control channel (PDCCH) including downlink control information (DCI) from the BS through the control link; and
transmitting a hybrid automatic repeat request (HARQ) feedback signal for the PDCCH,
wherein a transmission resource for the HARQ feedback signal is determined based on K0 and K1, where K0 represents a slot interval between the PDCCH and a physical downlink shared channel (PDSCH) and K1 represents an interval between the PDSCH and the HARQ feedback signal, and
wherein, based on the DCI including side control information (SCI) for the backhaul link, at least one of K0 and K1 is determined based on a predefined rule.

2. The method of claim 1, wherein K0 is determined as a value corresponding to a lowest or highest index in a time domain resource allocation (TDRA) table configured through radio resource control (RRC) signaling, based on the predefined rule.

3. The method of claim 1, wherein K0 is always determined as 0 based on the predefined rule.

4. The method of claim 1, wherein K1 is determined as a largest or smallest value among K1 values configured through radio resource control (RRC) signaling from the BS, based on the predefined rule.

5. The method of claim 1, further comprising reporting capability information about a minimum processing time related to the transmission of the HARQ feedback signal to the BS,
wherein the device determines K1 using the minimum processing time based on the predefined rule, regardless of an indication of K1 in the DCI.

6. The method of claim 1, wherein the device determines the HARQ feedback transmission resource by further considering a physical uplink control channel (PUCCH) resource indicator (PRI), and
wherein based on that a field for the PRI is not included in the DCI, the PRI is always determined as 1, regardless of a control channel element (CCE) index where the PDCCH is received.

7. The method of claim 1, wherein the DCI does not include a field for K0 and a start and length indicator value (SLIV), a field for K1, and a field for a physical uplink control channel (PUCCH) resource indicator (PRI).

8. The method of claim 1, wherein the HARQ feedback signal includes HARQ feedback information obtained through codebook combining only for PDCCHs including the SCI.

9. The method of claim 1, wherein the device is a network-controlled repeater (NCR).

10. A non-transitory computer-readable storage medium having recorded thereon instructions for executing the method of Claim 1.

11. A device configured to perform communication based on a control link and a backhaul link formed with a base station (BS) in a wireless communication system, the device comprising:
a radio frequency (RF) transceiver; and
a processor connected to the RF transceiver,
wherein the processor is configured to control the RF transceiver to:
receive a physical downlink control channel (PDCCH) including downlink control information (DCI) from the BS through the control link; and
transmit a hybrid automatic repeat request (HARQ) feedback signal for the PDCCH,
wherein a transmission resource for the HARQ feedback signal is determined based on K0 and K1, where K0 represents a slot interval between the PDCCH and a physical downlink shared channel (PDSCH) and K1 represents an interval between the PDSCH and the HARQ feedback signal, and
wherein, based on the DCI including side control information (SCI) for the backhaul link, at least one of K0 and K1 is determined based on a predefined rule.

12. A processing device configured to control a device having a control link and a backhaul link formed with a base station (BS) in a wireless communication system, the processing device comprising:
at least one processor; and
at least one memory connected to the at least one processor and storing instructions that, based on execution by the at least one processor, cause the device to:
receive a physical downlink control channel (PDCCH) including downlink control information (DCI) from the BS through the control link; and
transmit a hybrid automatic repeat request (HARQ) feedback signal for the PDCCH,
wherein a transmission resource for the HARQ feedback signal is determined based on K0 and K1, where K0 represents a slot interval between the PDCCH and a physical downlink shared channel (PDSCH) and K1 represents an interval between the PDSCH and the HARQ feedback signal, and
wherein, based on the DCI including side control information (SCI) for the backhaul link, at least one of K0 and K1 is determined based on a predefined rule.

13. A method of performing communication by a base station (BS) having a control link and a backhaul link formed with a device in a wireless communication system, the method comprising:
transmitting a physical downlink control channel (PDCCH) including downlink control information (DCI) to the device through the control link; and
receiving a hybrid automatic repeat request (HARQ) feedback signal for the PDCCH,
wherein a reception resource for the HARQ feedback signal is determined based on K0 and K1, where K0 represents a slot interval between the PDCCH and a physical downlink shared channel (PDSCH) and K1 represents an interval between the PDSCH and the HARQ feedback signal, and
wherein, based on the DCI including side control information (SCI) for the backhaul link, at least one of K0 and K1 is determined based on a predefined rule.

14. A base station (BS) configured to perform communication based on a control link and a backhaul link formed with a device in a wireless communication system, the device comprising:
a radio frequency (RF) transceiver; and
a processor connected to the RF transceiver,
wherein the processor is configured to control the RF transceiver to:
transmit a physical downlink control channel (PDCCH) including downlink control information (DCI) to the device through the control link; and
receive a hybrid automatic repeat request (HARQ) feedback signal for the PDCCH,
wherein a reception resource for the HARQ feedback signal is determined based on K0 and K1, where K0 represents a slot interval between the PDCCH and a physical downlink shared channel (PDSCH) and K1 represents an interval between the PDSCH and the HARQ feedback signal, and
wherein, based on the DCI including side control information (SCI) for the backhaul link, at least one of K0 and K1 is determined based on a predefined rule.
